(19) Europäisches Patentamt

European Patent Office

Office européen des brevets

(11) **EP 4 765 744 A1**

(12) **EUROPEAN PATENT APPLICATION**
published in accordance with Art. 153(4) EPC

(43) Date of publication:
**24.06.2026  Bulletin 2026/26**

(21) Application number: **23948906.5**

(22) Date of filing: **17.08.2023**

(51) International Patent Classification (IPC):
**H04L 25/02** (2006.01)        **H04W 24/02** (2009.01)
**G06N 20/00** (2019.01)

(52) Cooperative Patent Classification (CPC):
**G06N 20/00; H04L 25/02; H04W 24/02**

(86) International application number:
**PCT/CN2023/113640**

(87) International publication number:
**WO 2025/035479 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XIAO, Han
Dongguan, Guangdong 523860 (CN)**

(74) Representative: **Taor, Simon Edward William et al
Venner Shipley LLP
TIDE Bankside
8 Emerson Street
London SE1 9DU (GB)**

(54) **WIRELESS COMMUNICATION METHOD AND COMMUNICATION DEVICE**

(57)    Provided are a wireless communication method and a communication device. The method comprises: a first device sends first information to a second device, the first information being used for managing a first model, and the first model being used for receiving a target signal. In embodiments of the present application, the first model can be managed by means of the first information, thereby avoiding the problem that a model at a sending end does not match a model at a receiving end.

```
┌─────────────────┐                    ┌──────────────────┐
│   First device  │                    │   Second device  │
└─────────────────┘                    └──────────────────┘
         │           S1110, first information        │
         │─────────────────────────────────────────▶│
         │                                           │
```

**FIG. 11**

EP 4 765 744 A1

## Description

TECHNICAL FIELD

The present disclosure relates to the technical field of communication, and more particularly to a method of wireless communication and a communication device.

BACKGROUND

In various communication processes of communication systems, a model-based communication mode is introduced. For example, in a scheme based on non-orthogonal communication, a model may be introduced at the sending end to transmit a target signal. For another example, in a scheme based on non-orthogonal communication, a model may be introduced at the receiving end to receive the target signal. Generally speaking, the model used by the sending end for transmitting the target signal needs to match the model used by the receiving end for receiving the target signal, which helps to improve the success rate of the model-based communication process. However, in the conventional signal transmission process, the sending end and the receiving end cannot obtain each other's models, which may result in a mismatch between the model used at the sending end and the one used at the receiving end.

SUMMARY

The present disclosure provides a method for wireless communication and a communication device. Various aspects of the present disclosure are described below.

In a first aspect, there is provided a method for wireless communication, which includes: a first device sends first information to a second device, the first information being used to manage a first model, and the first model being used to receive a target signal.

In a second aspect, there is provided a method for wireless communication, which includes: a second device receives first information from a first device, the first information being used to manage a first model, and the first model being used to receive a target signal.

In a third aspect, there is provided a communication device, the communication device is a first device and includes: a communication unit, configured to send first information to a second device, the first information being used to manage a first model, and the first model being used to receive a target signal.

In a fourth aspect, there is provided a communication device, the communication device is a second device and includes: a communication unit, configured to receive first information from a first device, the first information being used to manage a first model, and the first model being used to receive a target signal.

In a fifth aspect, there is provided a communication device including a processor, a memory, and a communication interface. The memory is configured to store one or more computer programs, the processor is configured to invoke the computer programs in the memory, to cause the terminal device to perform some or all of the operations in the methods of the above aspects.

In a sixth aspect, an embodiment of the present disclosure provides a communication system including the above-described terminal device and/or network device. In another possible design, the system may further include other devices that interact with the terminal device or the network device in the solution provided by the embodiments of the present disclosure.

In a seventh aspect, an embodiment of the present disclosure provides a computer-readable storage medium having stored thereon a computer program that causes a communication device (e.g., a terminal device or a network device) to perform some or all of the operations in the methods of the above aspects.

In an eighth aspect, an embodiment of the present disclosure provides a computer program product, which includes a non-transitory computer-readable storage medium storing a computer program operable to cause a communication device (e.g., a terminal device or a network device) to perform some or all of the operations in the methods of the above aspects. In some implementations, the computer program product may be a software installation package.

In a ninth aspect, an embodiment of the present disclosure provides a chip including a memory and a processor, and the processor can invoke and run a computer program in the memory to implement some or all of the operations described in the methods of the above aspects.

In the embodiments of the present disclosure, the model (also referred to as the "first model") can be managed by the first information, which helps to avoid the problem of mismatch between the model of the sending end and the model of the receiving end.

BRIEF DESCRIPTION OF THE DRAWINGS

FIG. 1 is a wireless communication system 100 according to an embodiment of the present disclosure.

FIG. 2 is a schematic diagram of channel estimation and signal recovery according to an embodiment of the present disclosure.

FIGS. 3(a) to 3(b) show patterns of data symbols and pilot symbols in different configurations.

FIG. 4 shows a neural network model according to an embodiment of the present disclosure.

FIG. 5 shows a neural network model according to an embodiment of the present disclosure.

FIG. 6 shows a convolutional neural network according to an embodiment of the present disclosure.

FIG. 7 shows a long short-term memory (LSTM) model according to an embodiment of the present disclosure.

FIG. 8 shows a process of channel estimation based on a channel estimation module.

FIG. 9 is a wireless communication system 900 according to an embodiment of the present disclosure.

FIG. 10 illustrates a scheme of transmitting a first signal and a second signal based on a linear superposition mode according to an embodiment of the present disclosure.

FIG. 11 is a flowchart of a method for wireless communication according to an embodiment of the present disclosure.

FIGS. 12 to 19 are flowcharts of a method for wireless communication according to another embodiment of the present disclosure.

FIG. 20 is a schematic diagram of a communication device according to an embodiment of the present disclosure.

FIG. 21 is a schematic diagram of a communication device according to another embodiment of the present disclosure.

FIG. 22 is a schematic diagram of a communication apparatus according to an embodiment of the present disclosure.

DETAILED DESCRIPTION

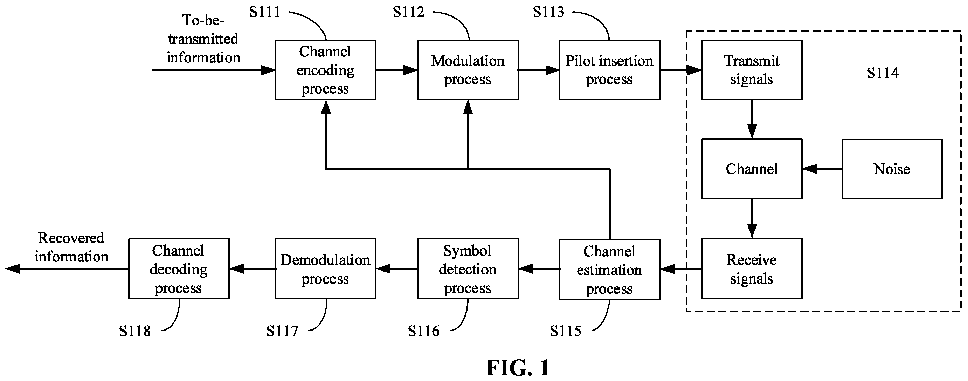

The technical solutions in the present disclosure will be described below with reference to the drawings. In order to facilitate understanding of the present disclosure, terms and communication processes related to the embodiments of the present disclosure will be described below with reference to FIGS. 1 to 9.

**1. Signal transmission process in wireless communication system**

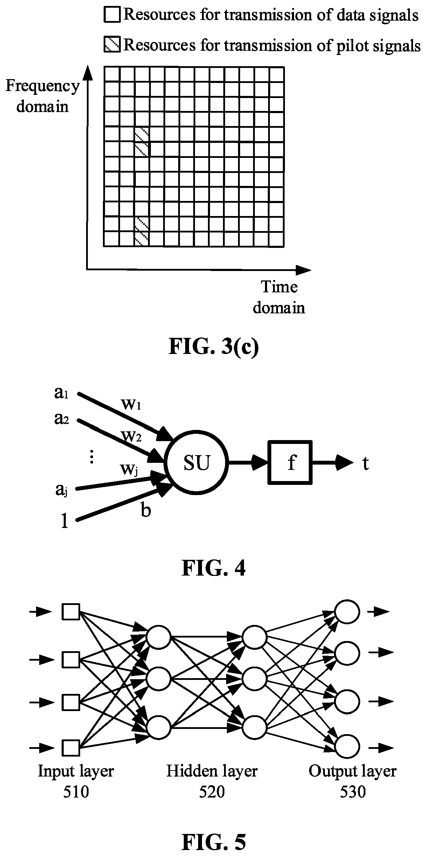

FIG. 1 is a flowchart of a signal transmission in a wireless communication system according to an embodiment of the present disclosure. As shown in FIG. 1, the signal transmission process in the wireless communication system can be roughly divided into various signal processing processes S111 to S118 shown in FIG. 1. Part or all of the signal processing process shown in FIG. 1 can be implemented by a separate artificial intelligence (AI) model, and the specific implementation can be described in FIGS. 5 to 8.

The transmitter performs channel encoding on the to-be-transmitted information in the channel encoding process S111 to obtain the encoded bitstream. Where the to-be-transmitted information may be in the form of a bitstream.

The bitstream is modulated into modulation symbols in the modulation process S112.

In the pilot insertion process S113, the pilot symbol is inserted into the modulated symbols to form a to-be-transmitted signal, where the pilot symbol may be used for channel estimation and symbol detection by the receiver.

In the signal transmission process S114, the signal is carried on the channel and transmitted to the receiver. Noise is usually superimposed during the transmission of signals through the channel.

In the channel estimation process S115, the receiver may perform channel estimation based on the pilot signal, obtain channel state information-reference signal (CSI), and feed back the CSI to the transmitter through the feedback link, so that the transmitter can adjust channel coding, modulation, precoding, etc.

In the symbol detection process S116, symbol detection is performed on the received modulation symbols to obtain a detection result.

In the demodulation process S117, the received modulation symbols are demodulated based on the detection result to obtain a bitstream.

In the channel decoding process S118, the bitstream is decoded to obtain recovered information, where the recovered information may be in the form of a bitstream.

It should be understood that the signal processing procedures S111 to S118 illustrated in FIG. 1 merely exemplify common signal processing procedures in a wireless communication system. The wireless communication system may further include signal processing procedures such as resource mapping, precoding, interference cancellation, CSI measurement, and the like, and these signal processing procedures may also be implemented by a separate AI model. For brevity, the present disclosure will not be described in detail.

**2. Channel estimation**

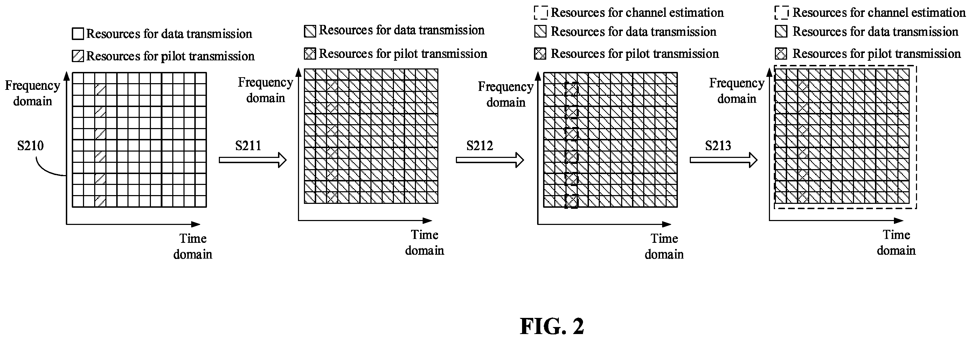

Due to the complexity and time-varying nature of the wireless channel environment, in a wireless communication system (e.g., the wireless communication system introduced above), the receiver needs to recover the received signal based on the estimation result of the channel. FIG. 2 is a schematic diagram of channel estimation and signal recovery according to an embodiment of the present disclosure.

As shown in FIG. 2, in operation S210, the transmitter transmits not only data signals but also a series of pilot signals known to the receiver on time-frequency resources. These pilot signals include, for example, channel state information-reference signals (CSI-RS), demodulation reference signals (DMRS), and the like.

In operation S211, the transmitter transmits the above data signals and the pilot signals to the transmitter through the channel.

Where the time-frequency resources occupied by the pilot signals are different from the time-frequency resources occupied by the data signals.

In operation S212, the receiver may perform channel estimation after receiving the pilot signals. In one possible implementation, the receiver may estimate channel information of the channel on which the pilot signals are transmitted based on the pre-stored pilot signals and the received pilot signals by using a channel estimation algorithm (e.g., least squares method (LS) channel estimation).

In operation S213, the receiver may recover the channel information over the entire time-frequency resource by using an interpolation algorithm according to the channel information of the channel for pilot sequence transmission, and the recovered channel information is used for subsequent CSI feedback, or data recovery, or the like.

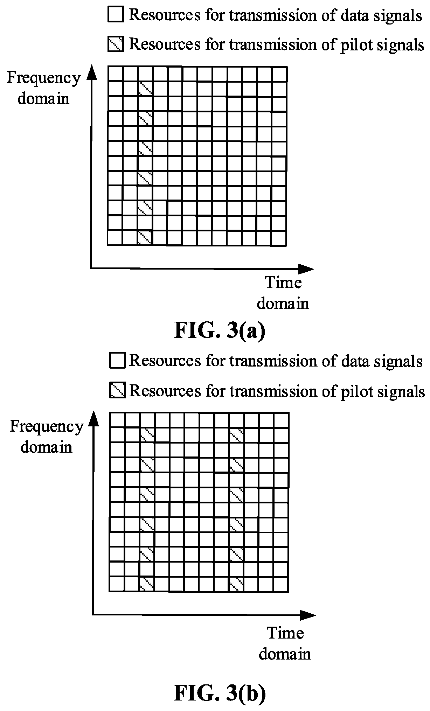

Based on the above description with reference to FIG. 2, it can be seen that the time-frequency resource for transmitting the pilot signals and the time-frequency resource for transmitting the data signals are different time-frequency resources. In addition, in some communication protocols (for example, the NR communication protocol), it is stipulated that symbols used for transmitting the pilot signals (hereinafter referred to as "pilot symbols") and symbols used for transmitting the data signals (hereinafter also referred to as "data symbols") are different. FIGS. 3(a) to 3(b) show patterns of data symbols and pilot symbols in different configurations.

Referring to FIG. 3(a), in one resource block (RB), pilot symbols are distributed with one symbol interval among multiple resource elements (REs) corresponding to symbol 2 in the RB. Referring to FIG. 3(b), in one RB, pilot symbols occupy part of multiple symbols corresponding to symbol 2 and symbol 10 in the RB. Referring to FIG. 3(c), in one RB, pilot symbols occupy multiple groups of REs in symbol 2 of the RB, where each group of REs includes two REs that are continuous in the frequency domain.

Generally, the different patterns shown in FIGS. 3(a) to 3(c) can be adapted to different communication environments. In some implementations, when the moving speed of the terminal device is high and the channel characteristics are rapidly time-varying, a pattern with a denser distribution of pilot symbols may be selected, which is helpful to improve the accuracy of channel quality estimation of the entire RB. For example, the pattern shown in FIG. 3(b) may be selected.

In other implementations, when the moving speed of the terminal device is slow and the channel characteristics are slowly time-varying, a pattern with a sparser distribution of pilot symbols may be selected, which is helpful to reduce the overhead generated by transmitting pilot signals on the premise of ensuring the accuracy of channel quality estimation of the entire RB.

### 3. Neural network

In recent years, artificial intelligence research represented by neural network has made great achievements in many fields, and it will also play an important role in people's production and life for a long time to come. Neural network can be understood as an operation model composed of multiple neuron nodes connected to each other, in which the connection between nodes can represent the weighted value from input signal to output signal, usually referred to as a parameter. Each node performs a weighted summation of different input signals and outputs them through a specific activation function.

Referring to FIG. 4, neurons can implement nonlinear mapping depending on the activation function, where the input of the neuron can be denoted as A, each dimension of the input is denoted as $a_j$, and the corresponding parameter is denoted as $w_j$, and the input is enhanced or weakened together with summation units (SUs). In addition, the output of the SU can be input into the activation function f to obtain the output t, where the values of j are 1, 2, ... , n.

Common neural networks include the convolutional neural network (CNN), the recurrent neural network (RNN), the deep neural network (DNN), etc.

A neural network applicable to the embodiment of the present disclosure will be described below with reference to FIG. 5. The neural network shown in FIG. 5 can be divided into three categories according to the location of different layers: an input layer 510, a hidden layer 520, and an output layer 530. In general, the first layer is the input layer 510, the last layer is the output layer 530, and the intermediate layers between the first layer and the last layer are hidden layers 520.

The input layer 510 is used to input data, where the input data may for example be a received signal received by a receiver. The hidden layer 520 is used to process the input data, for example, to decompress the received signal. The output layer 530 outputs processed output data, for example, outputs a decompressed signal.

As shown in FIG. 5, the neural network includes multiple layers, each layer includes multiple neurons, and the neurons between the layers may be fully connected or partially connected. For connected neurons, the output of the neurons of the previous layer can be used as the input of the neurons of the next layer.

With the continuous development of neural network research, neural network deep learning algorithms have been proposed in recent years, introducing more hidden layers into neural networks to form DNN. More hidden layers allow DNN to better describe complex situations in the real world. Theoretically, models with more parameters have higher complexity and greater "capacity", which means that it can complete more complex learning tasks. This neural network model is widely used in pattern recognition, signal processing, optimization combination, anomaly detection and so on.

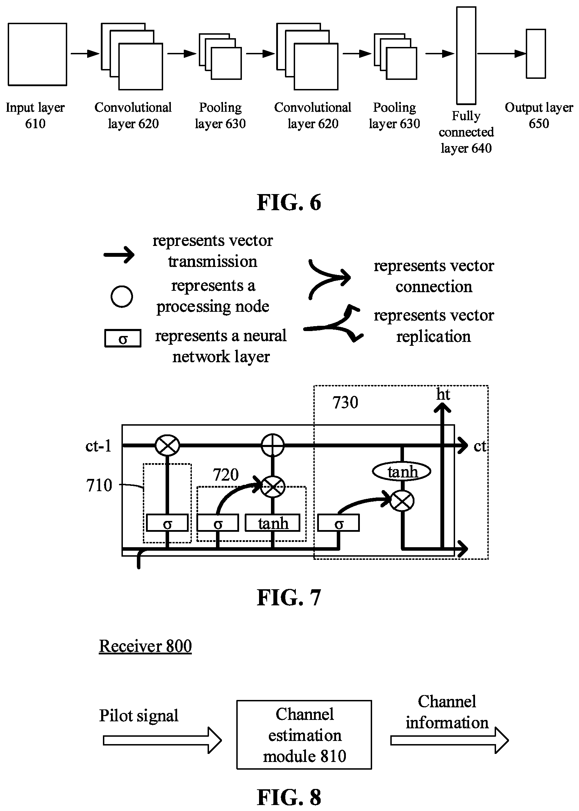

A CNN is a deep neural network with a convolutional structure, and its structure is shown in FIG. 6, which may include an input layer 610, a convolutional layer 620, a pooling layer 630, a fully connected layer 640, and an output layer 650.

Each convolution layer 620 may include multiple convolution operators, also referred to as kernels, which may function as a filter for extracting specific information from an input signal. The convolution operator may essentially be a parameter matrix, which is typically predefined.

The parameter values in these parameter matrices need to be obtained through a lot of training in practical applications. Each parameter matrix formed by the parameter values obtained by training can extract information from the input signal, thus helping CNN to make correct prediction.

When CNN has multiple convolutional layers, the initial convolutional layer often extracts more general features, which can also be called low-level features. As the depth of CNN deepens, the features extracted from subsequent convolutional layers become increasingly complex.

In the pooling layer 630, since it is often necessary to reduce the number of training parameters, a pooling layer is often periodically introduced after the convolutional layer. For example, it may be one convolutional layer followed by one pooling layer as shown in FIG. 6, or it may be multiple convolutional layers followed by one or more pooling layers. During signal processing, the sole purpose of the pooling layer is to reduce the spatial size of the extracted information.

In the fully connected layer 640, after processing by the convolutional layer 620 and the pooling layer 630, the CNN is not sufficient to output the required output information. Because, as previously described, the convolutional layer 620 and the pooling layer 630 will only extract features and reduce parameters brought by the input data. However, in order to generate the final output information (e.g., a bitstream of raw information transmitted by the transmitter), the CNN also needs to utilize the fully connected layer 640. Generally, the fully connected layer 640 may include multiple hidden layers, and the parameters included in the multiple hidden layers may be trained in advance according to relevant training data of a specific task type. For example, the task type may include decoding a data signal received by a receiver, or for example, the task type may further include channel estimation based on a pilot signal received by the receiver.

After the multiple hidden layers in the fully connected layer 640, that is, the last layer of the entire CNN is an output layer 650 for outputting results. Typically, the output layer 650 is provided with a loss function (e.g., a loss function similar to classification cross entropy) for calculating a prediction error or for evaluating the degree of difference between a result output by the CNN model (also known as a predicted value) and an ideal result (also known as a true value).

In order to minimize the loss function, the CNN model needs to be trained. In some implementations, the CNN model may be trained using a backpropagation algorithm (BP). The training process of BP consists of a forward propagation process and a back propagation process. In the process of forward propagation (as shown in FIG. 6, the propagation from 610 to 650 is forward propagation), the input data is input into the above layers of the CNN model, processed layer by layer and transmitted to the output layer. If the output result at the output layer is quite different from the ideal result, the minimization of the above loss function is taken as the optimization objective, and it is transferred to back propagation (as shown in FIG. 6, the propagation from 650 to 610 is back propagation), and the partial derivative of the optimization objective with respect to the weight of each neuron is obtained layer by layer, which constitutes the gradient vector of the optimization objective with respect to the weight vector, which is used as the basis for modifying the model parameters. The training process of CNN is completed in the parameter modification process. When the above error reaches the expected value, the training process of CNN ends.

It should be noted that the CNN shown in FIG. 6 is only an example of a convolutional neural network, and in a specific application, the convolutional neural network may also exist in the form of other network models, which is not limited in the embodiments of the present disclosure.

The purpose of RNNs is to process sequence data. In the conventional neural network model (for example, in the CNN model), from the input layer to the hidden layer and then to the output layer, the layers are fully connected, and the nodes between each layer are unconnected. However, this ordinary neural network structure is inadequate for many problems. For example, predicting the next word in a sentence typically requires using the preceding words, as words within a sentence are not independent. The reason why RNNs are called recurrent neural networks is that the current output of a sequence is also related to the previous output. The specific manifestation is that the network will memorize the previous information and apply it to the calculation of the current output, that is, the nodes between the hidden layers are no longer unconnected but connected, and the input of the hidden layer includes not only the output of the input layer but also the output of the hidden layer at the previous moment. Theoretically, RNNs are capable of processing sequence data of any length.

The training of RNN is the same as the training of conventional ANN (artificial neural network). The BP error back propagation algorithm is also used, but there is a difference. If RNNs are network expanded, the parameters W, U, V are shared, which is not the case in conventional neural networks. Moreover, when using the gradient descent algorithm, the output of each step depends not only on the network of the current step, but also on the state of the network of the previous steps. For example, when t = 4, three more steps need to be passed backwards, and various gradients need to be added to the next three steps. This learning algorithm is called back propagation through time (BPTT).

Since we already have artificial neural networks and convolutional neural networks, why do we need recurrent neural networks? The reason is simple: both artificial neural networks and convolutional neural networks are based on the assumption that elements are independent of each other, and inputs and outputs are independent, such as cats and dogs. But in the real world, many elements are interconnected, such as the change of stocks over time. For example, if someone says: "I like traveling, and my favorite place is Yunnan. I must definitely visit _ when I get the chance." Filling in the blank here, most people would know it should be "Yunnan". This is something we can infer from the context, but it's remarkably difficult for a machine to achieve the same. Therefore, the current recurrent neural network were developed, whose essence is: it has the ability to possess memory, akin to humans. Therefore, his output depends on the current input and memory. To explain RNN in one sentence, it means that a unit structure is reused.

At present, in order to solve the problem of gradient explosion or disappearance of RNN, a long short-term memory (LSTM) model is obtained by deformation on the basis of RNN. Referring to FIG. 7, the LSTM introduces a new memory unit $c_t$ (also referred to as "cell state") for linear recurrent information transfer, while outputting information to the external state ht of the hidden layer. At each moment t, $c_t$ records historical information up to the current moment. Unlike RNN, which only considers the most recent state, the memory unit will decide which states should be retained and which states should be forgotten, which solves the shortcomings of the conventional RNN in long-term memory.

Continuing with FIG. 7, in order to realize the selection of the state described above, the memory unit introduces a gate control mechanism to control the path of information transmission, similar to the gate in the data circuit, with "0" indicating Off and "1 " indicating On. The memory unit includes a forgetting gate 710, an input gate 720, and an output gate 730. Where the forgetting gate is used to control how much information the memory unit $c_{t-1}$ at the previous moment needs to be forgotten, the input gate is used to control how much information the candidate state $\widehat{c_t}$ at the current moment needs to be stored, and the output gate is used to control how much information the memory unit $c_t$ at the current time needs to be output to the external state ht.

## 4. Channel estimation based on AI decoder

The channel estimation based on the AI decoder aims to use the AI-based channel estimation module to process the pilot signal received by the receiver to realize channel estimation. FIG. 8 shows a process of channel estimation based on a channel estimation module. Referring to FIG. 8, the pilot signal received by the receiver 800 is used as an input of the channel estimation module 810, and accordingly, the channel estimation module 810 processes the input pilot signal to output channel information. In addition, in some implementations, other auxiliary information may be added in addition to the pilot signal to improve the accuracy of channel information output by the channel estimation module. For example, the channel estimation module 810 may also be input with an original sequence of pilot signals pre-stored by the receiver 800, an energy level of the receiver 800 receiving the pilot signals, a transmission delay in transmitting the pilot signals, or noise in transmitting the pilot signals, etc.

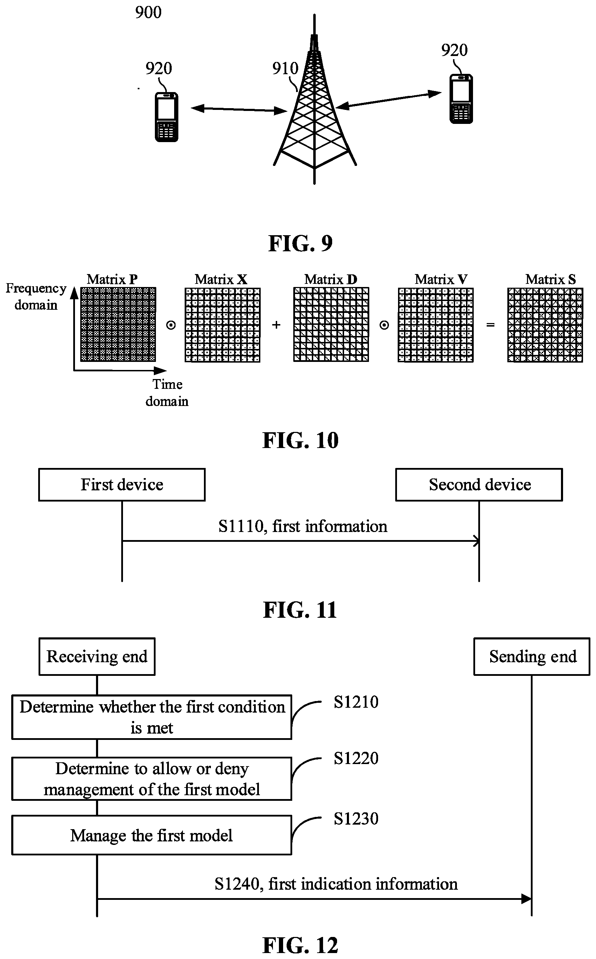

The communication process and terminology related to the embodiments of the present disclosure are described above with reference to FIGS. 1 to 8, and the communication system applicable to an embodiment of the present disclosure is described below with reference to FIG. 9.

FIG. 9 is a wireless communication system 900 according to an embodiment of the present disclosure. The wireless communication system 900 may include a network device 910. The network device 910 may be a device that communicates with the terminal device 920. The network device 910 may provide communication coverage for a particular geographic area and may communicate with the terminal device 920 located within the coverage area.

FIG. 9 exemplarily illustrates one network device 910 and two terminal devices 920. Alternatively, the wireless communication system 900 may include multiple network devices and another number of terminal devices may be included within the coverage range of each network device, which is not limited by the embodiment of the present disclosure.

Alternatively, the wireless communication system 900 may further include other network entities such as a network controller and a mobility management entity, and the embodiment of the present disclosure is not limited thereto.

Alternatively, the terminal devices 920 may also communicate directly with each other, for example, two terminal devices 920 may communicate through a device-to-device (D2D) link.

In the following description, the first device and the second device will be described as examples. In some implementations, the first device may be the network device 910 described above, and accordingly, the second device may be the terminal device 920 described above. In other implementations, the first device may be the terminal device 920 described above, and accordingly, the second device may be the network device 910 described above. In other implementations, the first device may be the terminal device 920 described above, and accordingly, the second device may be the terminal device 920 described above. The embodiments of the present disclosure do not specifically limit this.

It should be understood that the technical solutions of the embodiments of the present disclosure can be applied to various communication systems, such as a 5th generation (5G) system or a new radio (NR) system, a long term evolution (LTE) system, an LTE frequency division duplex (FDD) system, an LTE time division duplex (TDD), and the like. The technical solution provided in the present disclosure can also be applied to future communication systems, such as a sixth generation mobile communication system, a satellite communication system, and the like.

The terminal device in the embodiments of the present disclosure may also be referred to as user equipment (UE), an access terminal, a subscriber unit, a subscriber station, a mobile radio station, a mobile station (MS), a mobile terminal (MT), a remote station, a remote terminal, a mobile device, a user terminal, a terminal, a wireless communication device, a user agent, or a user apparatus. The terminal device in the embodiments of the present disclosure may be a device that provides voice and/or data connectivity to a user, and may be used to connect people, objects, and machines, for example, a handheld device having a wireless connection function, a vehicle-mounted device, or the like. The terminal device in the embodiments of the present disclosure may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the UE may be used as a base station. For example, a UE may act as a scheduling entity that provides sidelink signals between UEs in V2X or D2D, etc. For example, cellular phones and automobiles communicate with each other using sidelink signals. Communication between cellular phones and smart home devices without relaying communication signals through base stations.

The network device in the embodiments of the present disclosure may be a device for communicating with a terminal device, and the network device may also be referred to as an access network device or a radio access network device, for example, the network device may be a base station. The network device in the embodiments of the present disclosure may refer to a radio access network (RAN) node (or device) that connects the terminal device to the wireless network. A base station can broadly cover or be interchanged with various names such as: a NodeB, an evolved NodeB, an eNB, a next generation base station (gNB), a relay station, an access point, a transmitting and receiving point (TRP), a transmitting point (TP), a master station MeNB, a secondary station SeNB, an multi-standard radio (MSR) node, a home base station, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination thereof. The base station may also refer to a communication module, a modem, or a chip set up within the aforementioned device or apparatus. The base station may also be a mobile switching center, a device that assumes a base station function in device-to-device (D2D), a vehicle-to-everything (V2X), a machine-to-machine (M2M) communication, a network-side device in a 6G network, a device that assumes a base station function in future communication systems, or the like. The base stations may support networks of the same or different access technologies. The embodiments of the present disclosure do not limit the specific technology and the specific device form adopted by the network device.

The base station may be fixed or mobile. For example, a helicopter or a drone may be configured to act as a mobile base station, and one or more cells may move according to the location of the mobile base station. In other examples, a helicopter or a drone may be configured as a device to communicate with another base station.

In some deployments, the network device in the embodiments of the present disclosure may refer to a CU or a DU, or the network device includes a CU and a DU. The gNB may also include an AAU.

Network devices and terminal devices can be deployed on land, including indoors or outdoors, handheld or vehicle-mounted. They may also be deployed on water surfaces; or they may be deployed in the air, such as on airplanes, balloons, and satellites. In the embodiments of the present disclosure, the scenario in which the network device and the terminal device are located is not limited.

It should be understood that the communication device referred to in the present disclosure may be a network device or a terminal device. For example, the first communication device is a network device, and the second communication device is a terminal device. In another example, the first communication device is a terminal device, and the second communication device is a network device. In another example, both the first communication device and the second communication device are network devices or both are terminal devices.

It should also be understood that all or part of the functionality of the communication device in the present disclosure may also be implemented by software functionality running on hardware, or by virtualization functionality instantiated on a platform, such as a cloud platform.

At present, in a known communication system, in order to improve the reliability of signal transmission, signals transmitted on multiple transmission resources are transmitted in an orthogonal transmission manner, which can be understood as processing signals transmitted on multiple transmission resources into mutually orthogonal signals, and the orthogonal signals are transmitted independently of each other without interfering with each other. In the scenario of orthogonal transmission, a certain transmission resource can only be used to transmit one type of signal at a certain moment, resulting in a low utilization rate of the transmission resource. On the other hand, when the total transmission resources are constant, if the number of transmission resources occupied by a certain signal (hereinafter, also referred to as "first signal") increases, it means that the number of transmission resources available for transmission of other signals (hereinafter, also referred to as "second signal") decreases, and other signals may not be transmitted in time.

Taking the first signal as a pilot signal and the second signal as a data signal as an example, the pilot signal and the data signal are transmitted orthogonally on different transmission resources. That is to say, a certain transmission resource can only be used to transmit the data signals or the pilot signals at a certain moment, resulting in a low utilization rate of the transmission resource. On the other hand, when the total transmission resources are constant, if the number of transmission resources occupied by the pilot signals increases, it means that the number of transmission resources available for transmitting the data signals decreases, and data signals may not be transmitted in time. Alternatively, if the number of transmission resources occupied by the data signals increases, it means that the number of transmission resources available for transmitting the pilot signals decreases, which may lead to a decrease in the accuracy of channel estimation based on the pilot signals.

Therefore, in view of the above problems, an embodiment of the present disclosure provides a method for wireless communication, in which non-orthogonal transmission can be performed between a first signal and a second signal on the same transmission resource (also referred to as a "target transmission resource") to improve the utilization rate of the transmission resource.

In some implementations, the target signal includes a first signal and a second signal that are non-orthogonal. That is, the target signal includes the first signal and the second signal transmitted non-orthogonally, or the second signal and the first signal are transmitted non-orthogonally on the target transmission resource.

Based on the above description, it can be seen that the first signal and the second signal that are non-orthogonally transmitted can be transmitted through the target transmission resource at the same time, and it can be understood that the first signal and the second signal are transmitted on the target transmission resource in a superimposed manner. Therefore, in the embodiments of the present disclosure, the target transmission resource can also be referred to as a "superimposed transmission resource". The superposition mode of the first signal and the second signal will be described below with reference to FIGS. 11 to 58, and will not be repeatedly described here for brevity.

In the embodiments of the present disclosure, the first signal and the second signal may be different types of signals. For example, the second signal may include a data signal, and accordingly, the first signal may include a pilot signal. Here, the pilot signal is also referred to as a reference signal, and the reference signal may be, for example, a CSI-RS, a DMRS, a phase-tracking reference signal (PT-RS), a sounding reference signal (SRS), an SSB synchronization signal block (SS/PBCH block), a positioning reference signal (PRS), or the like. In the embodiments of the present disclosure, the first signal and the second signal may be different types of signals.

In order to facilitate understanding, the non-orthogonal transmission mode applicable to an embodiment of the present disclosure will be described below with reference to FIG. 10, and it should be noted that the non-orthogonal transmission mode applicable to the embodiment of the present disclosure is not limited thereto.

Referring to FIG. 10, assuming that the target transmission resource for non-orthogonal transmission belongs to a transmission resource set, the target signal transmitted on one or more target transmission resources in the transmission resource set is represented by a matrix $S$, and accordingly, the matrix $S$ is determined by a formula $S = V \odot D + X \odot P$, or the matrix $S$ meets the condition of $V \odot D + X \odot P$. Where the matrix $V$ represents a second parameter associated with the target transmission resource in the transmission resource set. The matrix $X$ represents a first parameter associated with the target transmission resource in the transmission resource set. The matrix $D$ represents a second signal transmitted on the target transmission resource in the transmission resource set. The matrix $P$ represents a first signal transmitted on the target transmission resource in the transmission resource set. $\odot$ represents the Hadmar product.

In some implementations, assuming that the energy threshold corresponding to the target transmission resource is 1, the matrix $V$ is determined based on the formula $V = sqrt(A)$, and the matrix $X$ is determined based on the formula $X = sqrt(1 - A)$, where the matrix $A \in [0, 1]$, $sqrt()$ represents the square root calculation.

Note that, in the embodiments of the present disclosure, the number of target transmission resources included in the transmission resource set is not limited, and accordingly, the dimension of the matrix (for example, the matrix S, the matrix $V$, the matrix $D$, the matrix $P$, the matrix $A$, the matrix $V$, the matrix $X$, and the like) described above is associated with the dimension (or the number) of the target transmission resources in the transmission resource set. For example, each element in the matrix may correspond to one transmission resource in the transmission resource set, and in some implementations, the dimension of the matrix is the same as the dimension of the target transmission resource in the transmission resource set. Taking the transmission resource set as an RB as an example, the RB may be expressed as including N rows and M columns of REs, and all the REs in the RB are superimposed transmission resources. Accordingly, the matrix referred to above may be a matrix of N rows and M columns, where M and N are positive integers.

Generally, when the target transmission resource allocated by the system changes, the dimension of the above matrix also changes. For example, if the target transmission resource allocated by the system is two RBs, the dimension of the matrix is the same as that of the RE in the two RBs. Assuming that an RB can be expressed as including N rows and M columns of REs, then two RBs include 2N rows and 2M columns of REs, and the dimensions corresponding to the two RBs are 2 N rows and 2M columns. In this case, when all REs in the two RBs are superimposed transmission resources, the dimension of the matrix described above may be a matrix of 2N rows and 2M columns.

Generally, for a target signal that is not transmitted orthogonally, the receiving end may receive the target signal based on the first model, which is helpful to improve the reception performance of the target signal. The first model may be an AI model and/or a machine learning (ML) model.

Based on the above introduction, it can be seen that a model-based communication mode is introduced in various communication processes of communication systems. For example, in a scheme based on non-orthogonal communication, a model may be introduced at the sending end to transmit a target signal. For another example, in a scheme based on non-orthogonal communication, a model may be introduced at the receiving end to receive the target signal. Generally speaking, the model used by the sending end for transmitting the target signal needs to match the model used by the receiving end for receiving the target signal, which helps to improve the success rate of the model-based communication process. However, in the conventional signal transmission process, the sending end and the receiving end cannot obtain each other's models, which may result in a mismatch between the model used at the sending end and the one used at the receiving end.

Therefore, in view of the above problems, an embodiment of the present disclosure provides a method for wireless communication, in which a model (hereinafter, also referred to as a "first model") can be managed by the first information, which helps to avoid the problem of mismatch between the model of the sending end and the model of the receiving end. In order to facilitate understanding, a method for wireless communication according to an embodiment of the present disclosure will be described below with reference to FIG. 11. The method shown in FIG. 11 includes operation S1110.

In order to facilitate understanding, the sending end and the receiving end described below refer to the sending end and the receiving end of the target signal. The receiving end of the target signal may be a receiving end of the first information or a sending end of the first information, and accordingly, the sending end of the target signal may be a receiving end of the first information or a sending end of the first information. The following will introduce specific scenarios.

In operation S1110, a first device sends first information to a second device, the first information being used to manage a first model, and the first model being used to receive a target signal.

In the embodiments of the present disclosure, the manner of managing the first model is not limited. In some implementations, the management of the first model may include model switching, that is, switching the first model to a second model, where the first model and the second model are different models. Generally, when the first model cannot be applied to the current communication conditions, the model may be switched, which contributes to improving the success rate of communication.

It should be noted that both the first model and the second model may be two models among multiple models pre-stored by the receiving end or the sending end. Taking the receiving end as an example, the above-mentioned model switching process can be understood as performing model switching among multiple preset models. In the embodiments of the present disclosure, the second model may be configured by other devices. Taking the receiving end as an example, the second model may be a model indicated by the sending end to the receiving end, instead of being pre-stored by the receiving end.

In other implementations, the management of the first model may include model updating, i.e., updating the first model, or training the first model, or retraining the first model. For example, updating the first model may include updating hyperparameters of the first model, where the hyperparameters may include, for example, an optimizer used by the first model and/or a number of update steps of the first model. Generally, when the first model cannot be applied to the current communication conditions, the model may be updated, which contributes to improving the success rate of communication.

In the embodiments of the present disclosure, the training data of the first model is not limited, and for example, the training data of the first model may be data in an actual communication process. For another example, the training data of the first model may be pre-stored data.

In addition, the training mode of the first model is not limited in the embodiments of the present disclosure, and for example, the training mode of the first model may be online training. For another example, the training mode of the first model may be offline training.

In other implementations, the management of the first model may include a model fallback, i.e., a fallback from the first model to a target reception mode. Taking the first model as an AI model as an example, the target reception mode may include a non-AI communication mode, that is, the model fallback may include falling back from a communication mode based on the AI model to a conventional non-AI communication mode. Generally, when the first model cannot be applied to the current communication conditions, the model fallback may be performed, which contributes to improving the success rate of communication.

In other implementations, the management of the first model may include model maintenance, i.e., maintaining use of the first model for communication. For example, maintaining the use of the first model to receive the target signal. Generally, when the first model can be applied to the current communication conditions, the model may be maintained, which contributes to improving the success rate of communication.

In some implementations, the manner of managing the first model described above may be defined by an event manner, and accordingly, the first device may manage the first model by executing the corresponding event. For example, the above-described model switching may be defined by a first event. For another example, the above-described model updating may be defined by a second event. For another example, the above-described model fallback may be defined by a third event. For another example, the above-described model maintenance may be defined by a fourth event.

In some implementations, the above management of the first model may be triggered based on a first condition, where the first condition is associated with reception performance of the target signal. Taking the target signal including the pilot signal as an example, the reception performance of the target signal includes the accuracy of channel state information obtained based on the pilot signal. Taking the target signal including the data signal as an example, the reception performance of the target signal includes the accuracy of data obtained based on the target signal.

The above management of the first model may be triggered based on the first condition, and may include triggering management of the first model when the first condition is met. In the embodiments of the present disclosure, the above management of the first model may be triggered based on the first condition, and may include triggering management of the first model when the first condition is not met.

Taking the example of triggering management of the first model when the first condition is met, in some implementations, the first condition includes one of: reception performance of the target signal is less than a reception performance threshold; within a target time period, a first duration is greater than a time threshold; within the target time period, a first count is greater than a count threshold; a second duration is greater than the time threshold; or a second count is greater than the number threshold.

Taking the first condition including that the reception performance of the target signal is less than the reception performance threshold as an example, it is explained that the accuracy rate of the first model for correctly receiving the target signal is low, and the first model may not be applicable to the current transmission conditions. In this case, the first model may be managed. The reception performance threshold may be determined based on one or more of: predefined information, pre-configured information, or configuration information of the network device.

Taking the first condition including that, within the target time period, the first duration is greater than a time threshold as an example, within the target time period, the first duration is a duration during which the reception performance of the target signal is less than the reception performance threshold. When, within the target time period, the first duration is greater than the time threshold, it means that the accuracy rate of the first model in correctly receiving the target signal is low, and the first model may not be applicable to the current transmission conditions. In this case, the first model may be managed. Where the target time period and/or the respective thresholds (e.g., the time threshold and/or the reception performance threshold) may be determined based on one or more of: predefined information, pre-configured information, or configuration information of the network device.

Taking the first condition including that, within the target time period, a first count is greater than a count threshold as an example, the first count is a count that the reception performance of the target signal is less than the reception performance threshold. When, within the target time period, the first count is greater than the count threshold, it means that the accuracy rate of the first model in correctly receiving the target signal is low, and the first model may not be applicable to the current transmission conditions. In this case, the first model may be managed. Where the target time period and/or the respective thresholds (e.g., the count threshold and/or the reception performance threshold) may be determined based on one or more of: predefined information, pre-configured information, or configuration information of the network device.

Taking the example of the first condition including that a second duration is greater than the time threshold, the second duration is a duration during which the reception performance of the target signal is less than the reception performance threshold. When the second duration is greater than the time threshold, it means that the accuracy rate of the first model in correctly receiving the target signal is low, and the first model may not be applicable to the current transmission conditions. In this case, the first model may be managed. Where the time threshold and/or the reception performance threshold may be determined based on one or more of: predefined information, pre-configured information, or configuration information of the network device.

Taking the first condition including that a second count is greater than a count threshold as an example, the second count is a count that the reception performance of the target signal is less than the reception performance threshold. When the second count is greater than the count threshold, it means that the accuracy rate of the first model in correctly receiving the target signal is low, and the first model may not be applicable to the current transmission conditions. In this case, the first model may be managed. Where the count threshold and/or the reception performance threshold may be determined based on one or more of: predefined information, pre-configured information, or configuration information of the network device.

In the embodiments of the present disclosure, the device for determining whether or not the first condition is met is not limited. In some implementations, whether the first condition is met may be determined by the first device. In other implementations, whether the first condition is met may be determined by the second device. In other implementations, whether the first condition is met may be determined jointly by the first device and the second device.

In the embodiments of the present disclosure, the specific determination mode based on the first condition is not limited. In some implementations, the first model may be managed when the first condition is met for the first time, and this determination mode may also be referred to as a "single-determination mode". In other implementations, the first model may be managed when the first condition is met multiple times, and this determination mode may also be referred to as a "multiple-determination mode". In other implementations, the first model may be managed when the occurrence of a situation meeting the first condition within the target time is accumulated to a preset count, and this determination mode may also be referred to as a "cumulative-determination mode". In order to facilitate understanding, the above three determination modes are introduced below.

For the single determination mode, it is assumed that the first model is used to estimate the channel of the non-orthogonal pilot of a certain pattern, and if the channel estimation result of the first model is greatly different from the real channel estimation result, it means that the accuracy rate of the channel estimation by the first model is low, and the first model may not be applicable to the current transmission conditions. In this case, the first model can be managed.

Assuming that the first model is used for symbol detection of the non-orthogonal pilot of a certain pattern, if there is a large difference between the channel estimation result of the first model and the symbol associated with the original data, it means that the accuracy rate of symbol detection of the first model is low, and the first model may not be applicable to the current transmission conditions. In this case, the first model may be managed.

Assuming that the target signal is obtained based on non-orthogonal transmission of the pilot signal and the data signal, and the first model is used for pilot data separation of the target signal of a certain pattern, if the difference between the pilot data separation result of the first model and the original signal (the original data signal and the original pilot signal) is large, it means that the accuracy rate of pilot data separation of the first model is low, and the first model may not be applicable to the current transmission conditions. In this case, the first model can be managed.

In some implementations, the multiple-determination mode may involve consecutive determinations in time. For example, the multiple-determination mode may consist of N consecutive determinations, where N is a positive integer greater than 1. Alternatively, the multiple-determination mode may be multiple determinations that are discontinuous in time (also referred to as "non-consecutive"). For example, the multiple-determination mode may consist of N non-consecutive determinations, where N is a positive integer greater than 1.

In other implementations, the multiple-determination mode may be a periodic multiple-determination mode. For example, one determination may be performed in each of T periods, where T is a positive integer greater than 1. Alternatively, the multiple-determination mode may be an aperiodic multiple-determination mode.

Assuming that the first model is used to estimate the channel of the non-orthogonal pilot of a certain pattern, if the average value of n consecutive channel estimation results of the first model is greatly different from the real channel estimation result, it means that the accuracy rate of the channel estimation by the first model is low, and the first model may not be applicable to the current transmission conditions. In this case, the first model can be managed, where n is a positive integer less than or equal to N.

Assuming that the first model is used for symbol detection of the non-orthogonal pilot of a certain pattern, if there is a large difference between t channel estimation results of the first model and symbols associated with the original data in T cycles, it means that the accuracy rate of symbol detection of the first model is low, and the first model may not be applicable to the current transmission conditions. In this case, the first model may be managed, where t is a positive integer less than or equal to T.

Assuming that the target signal is obtained based on non-orthogonal transmission of the pilot signal and the data signal, and the first model is used for pilot data separation of the target signal of a certain pattern, if n non-consecutive pilot data separation results of the first model all show significant differences from the original signal (the original data signal and the original pilot signal), it means that the accuracy rate of pilot data separation of the first model is low, and the first model may not be applicable to the current transmission conditions. In this case, the first model can be managed, where n is a positive integer less than or equal to N.

In the cumulative-determination mode, multiple determinations may be made on the first model cumulatively within a target time period, where the target time period may be represented by a duration of a first time window, where the first time window may include, for example, L milliseconds, or the first time window may include, for example, L time slots, or the first time window may include, for example, L subframes. In the embodiments of the present disclosure, the target time period may not be represented by a time window.

Assuming that the first model is used to estimate the channel of the non-orthogonal pilot of a certain pattern, if the average value of n consecutive channel estimation results of the first model is greatly different from the real channel estimation result, and n reaches the preset cumulative number, it means that the accuracy rate of the channel estimation by the first model is low, and the first model may not be applicable to the current transmission conditions. In this case, the first model can be managed, where n is a positive integer less than or equal to N.

Assuming that the first model is used for symbol detection of the non-orthogonal pilot of a certain pattern, if there is a large difference between t channel estimation results of the first model and symbols associated with the original data in T cycles, and t reaches the preset cumulative number, it means that the accuracy rate of symbol detection of the first model is low, and the first model may not be applicable to the current transmission conditions. In this case, the first model may be managed, where t is a positive integer less than or equal to T.

Assuming that the target signal is obtained based on non-orthogonal transmission of the pilot signal and the data signal, and the first model is used for pilot data separation of the target signal of a certain pattern, if n non-consecutive pilot data separation results of the first model all show significant differences from the original signal (the original data signal and the original pilot signal), and n reaches the preset cumulative number, it means that the accuracy rate of pilot data separation of the first model is low, and the first model may not be applicable to the current transmission conditions. In this case, the first model can be managed, where n is a positive integer less than or equal to N.

It should be noted that the above description is based on the example that when there is a large difference between the prediction result of the first model and the real result, the management of the first model is triggered. In the embodiments of the present disclosure, if the difference between the predicted result of the first model and the real result is small, the management of the first model may be triggered, and in this case, the management of the first model may include maintaining the use of the first model.

As described above, in some scenarios, the above-described parameters related to the determination may be configured by the network device. For example, the network device may be configured by one or more of the following information: downlink control information (DCI), media access control control element (MAC CE), radio resource control (RRC), RRC reconfiguration message, system broadcast, master information block (MIB), system information block (SIB), or SIB1.

In the embodiments of the present disclosure, the DCI and/or MAC CE configuration helps to reduce the delay in configuring the above parameters. In the embodiments of the present disclosure, configuration by RRC signaling and/or RRC reconfiguration message helps to avoid occupying physical downlink control channel (PDCCH) resources, and in addition, helps to improve the flexibility of configuration. In the embodiments of the present disclosure, configuration by system broadcast, MIB, SIB1, SIB, or the like helps to allow more terminal devices to complete configuration by broadcast, thereby reducing transmission resources required for transmitting the above configuration. In addition, broadcast can be performed within the range of the cell, which helps to facilitate unified management of the cell.

It should be noted that the determination mode described in the embodiments of the present disclosure can be used in combination with the first condition described above. For example, if the determination mode is a single-determination mode, the first condition may include that the reception performance of the target signal is less than the reception performance threshold. For example, if the determination mode is a multiple-determination mode, the first condition may include that the second count is larger than the count threshold. For another example, if the determination mode is a cumulative-determination mode, the first condition may include one or more of the following: within a target time period, a first duration is greater than a time threshold; within the target time period, a first count is greater than a count threshold; or a second duration is greater than the time threshold.

In some implementations, the target signal may be a non-orthogonally transmitted signal described above. In the embodiments of the present disclosure, the target signal is not specifically limited, and the target signal may be a signal transmitted orthogonally.

Taking the above-described target signal as a non-orthogonally transmitted signal as an example, in some implementations, the first model may be a model for transmitting the target signal described above. For example, the first model may be a model for superimposing the first signal and the second signal. For another example, the first model may be a model for modulating the first signal and/or the second signal. In other implementations, the first model may be a model for reception of the target signal described above. For example, the first model may be a model for decoding the target signal. As another example, the first model may be a model for demodulating the target signal. As another example, the first model may be a model for recovering the target signal.

It should be noted that in the embodiments of the present disclosure, the first device and/or the second device are not limited. For example, the first device may be a sending end of the above-described target signal, and accordingly, the second device may be a receiving end of the target signal. For another example, the first device may be a receiving end of the target signal, and accordingly, the second device may be a sending end of the target signal.

The first device and the second device will be described below in detail based on different implementations of the first information, and will not be described in detail here for brevity.

The first information of the embodiments of the present disclosure will be described below in conjunction with Examples 1 to 5.

**Example 1,** the first information indicates a management result of managing the first model.

For example, in a case that managing the first model includes **switching** the first model to a second model, the first information indicates that switching to the second model is successful, or the first information indicates that switching to the second model is failed.

In some implementations, if the first information indicates that the switching of the second model is successful, the first information includes information of the second model.

In some implementations, the information of the second model includes one or more of the following: an identification of the second model; parameters of the second model; or a transmission mode of the target signal associated with the second model.

For example, the information of the second model includes the identification of the second model, and the identification of the second model indicates the second model. For example, the identification of the second model may be an index of the second model. For another example, the identification of the second model may be a functional identification of the second model. For another example, the identification of the second model may be a version number of the second model.

Taking the example of the information of the second model including parameters of the second model, in some implementations, the parameters of the second model may indicate the weight of the second model. In other implementations, it may indicate the model structure of the second model.

Taking the example of the information of the second model including a transmission mode of the target signal, in some implementations, the transmission mode of the target signal may be indicated by a transmission pattern of the target signal, where the transmission pattern of the target signal indicates transmission resources available for transmitting the target signal. The transmission resources may include one or more of time domain resources, frequency domain resources, and spatial domain resources. Taking the target signal including the pilot signal as an example, the transmission pattern of the target signal may be the transmission pattern of the pilot signal.

In some implementations, the transmission mode of the target signal may include one or more of the following: an identification of the transmission pattern of the target signal, a parameter of the transmission pattern of the target signal, and a matrix corresponding to the transmission pattern of the target signal (e.g., the matrix S described above). In some scenarios, the above information may also be referred to as updated receiver configuration information, where the updated receiver receives signals based on the updated first model.

For example, managing the first model includes **updating** the first model to an updated first model, the first information indicates that the update of the first model is successful, or the first information indicates that the update of the first model is failed.

In some implementations, if the first information indicates that the update of the first model is successful, the first information includes information of the updated first model (also referred to as "update information").

In some implementations, the update information includes one or more of the following: hyperparameters of the updated first model; or a transmission mode of the target signal associated with the updated first model.

For example, the update information includes hyperparameters of the updated first model, where the hyperparameters may include one or more of the following: a learning rate; a batch size; a number of iterations; a regularization parameter; a number of hidden units; an activation function; or an optimization algorithm, and so on.

Taking the example of the update information including a transmission mode of the target signal, in some implementations, the transmission mode of the target signal may be indicated by a transmission pattern of the target signal, where the transmission pattern of the target signal indicates transmission resources available for transmitting the target signal. The transmission resources may include one or more of time domain resources, frequency domain resources, and spatial domain resources. Taking the target signal including the pilot signal as an example, the transmission pattern of the target signal may be the transmission pattern of the pilot signal.

In some implementations, the transmission mode of the target signal may include one or more of the following: an identification of the transmission pattern of the target signal, a parameter of the transmission pattern of the target signal, and a matrix corresponding to the transmission pattern of the target signal (e.g., the matrix **S** described above). In some scenarios, the above information may also be referred to as updated receiver configuration information, where the updated receiver receives signals based on the updated first model.

For example, in a case that managing the first model includes falling back from the first model to a target reception mode, the first information indicates that fallback to the target reception mode is successful, or the first information indicates that the fallback to the target reception mode is failed.

In some implementations, if the first information indicates that the fallback to the target reception mode is successful, the first information includes information of the target reception mode.

In some implementations, the information of the target reception mode includes one or more of the following: configuration information of the target reception mode; or a transmission mode of the target signal associated with the target reception mode. Here, the target signal may be a signal transmitted based on an orthogonal transmission mode.

Taking the example of the information of the target reception mode including a transmission mode of the target signal, in some implementations, the transmission mode of the target signal may be indicated by a transmission pattern of the target signal, where the transmission pattern of the target signal indicates transmission resources available for transmitting the target signal. The transmission resources may include one or more of time domain resources, frequency domain resources, and spatial domain resources. Taking the target signal including the pilot signal as an example, the transmission pattern of the target signal may be the transmission pattern of the conventional pilot signal.

In some implementations, the transmission mode of the target signal may include one or more of the following: an identification of the transmission pattern of the target signal, a parameter of the transmission pattern of the target signal, and a matrix corresponding to the transmission pattern of the target signal (e.g., the matrix **S** described above). In some scenarios, the above information may also be referred to as receiver configuration information, where the receiver is a conventional receiver that receives signals based on a non-AI model.

For example, in a case that managing the first model includes maintaining use of the first model to receive the target signal, the first information indicates that maintaining the use of the first model to receive the target signal is successful, or the first information indicates that maintaining the use of the first model to receive the target signal is failed.

In some implementations, in a case that the first information indicates that maintaining the use of the first model to receive the target signal is successful, the first information includes information for monitoring the first model. Here, the information used for monitoring the first model may be parameters associated with various determination modes described above, and will not be repeated here for brevity.

In the embodiments of the present disclosure, the first device may be a receiving end of the target signal, and the second device may be a sending end of the target signal. In some implementations, the first model may be located at the first device.

**Example 2:** The first information is indicates a target event performed to manage the first model.

As described above, the manner of managing the first model may be embodied in an event manner, and thus, in some implementations, the manner of managing the first model may be indicated by the first information indicating a target event performed to manage the first model. In the embodiments of the present disclosure, the manner of managing the first model may be directly indicated by the first information, and the manner of managing the first model does not need to be defined by an event.

In some implementations, the above-described target event includes performing one or more of: an event for switching the first model (i.e., the first event introduced above); an event for updating the first model (i.e., the second event introduced above); an event for falling back from the first model (i.e., the third event introduced above); or an event for maintaining signal reception based on the first model (i.e., the fourth event introduced above).

In some implementations, the method further includes: a first device determines to allow or deny management of the first model. The above operation S1110 includes: in response to allowing the management of the first model, the first device sends the first information to the second device. In the embodiments of the present disclosure, the first device may directly send the first information to the second device without performing the above-described determination operation.

In the embodiments of the present disclosure, the first device may be a receiving end of the target signal, and the second device may be a sending end of the target signal. In some implementations, the first model may be located at the first device. In the embodiments of the present disclosure, the first device may be a sending end of the target signal, and the second device may be a receiving end of the target signal. In some implementations, the first model may be located at the second device.

**Example 3:** The first information includes configuration information associated with managing the first model.

In other words, the configuration information is used to configure the second device to manage the first model. In the embodiments of the present disclosure, the above configuration information may be slightly different for different management modes.

In some implementations, when managing the first model includes switching the first model to the second model, the configuration information includes configuration information of the second model, or the configuration information is used to configure the second model.

In some implementations, the configuration information is used to configure a transmission mode of the target signal associated with the second model. Here, the transmission mode of the target signal may be indicated by a transmission pattern of the target signal, where the transmission pattern of the target signal indicates transmission resources available for transmitting the target signal. The transmission resources may include one or more of time domain resources, frequency domain resources, and spatial domain resources. Taking the target signal including the pilot signal as an example, the transmission pattern of the target signal may be the transmission pattern of the pilot signal.

In some implementations, the transmission mode of the target signal may include one or more of the following: an identification of the transmission pattern of the target signal, a parameter of the transmission pattern of the target signal, and a matrix corresponding to the transmission pattern of the target signal (e.g., the matrix **S** described above). In some scenarios, the above information may also be referred to as receiver configuration information, where the receiver is a receiver that receives signals based on an AI model.

In some implementations, if managing the first model includes updating the first model, the configuration information is used to update the first model, or serves as configuration information for updating the first model.

In some implementations, the above configuration information may include hyperparameters associated with updating the first model, for example, an optimizer used by the updated first model. Another example is the number of update steps of the updated first model.

In some implementations, the configuration information is used to configure a transmission mode of the target signal associated with the updated first model. Here, the transmission mode of the target signal may be indicated by a transmission pattern of the target signal, where the transmission pattern of the target signal indicates transmission resources available for transmitting the target signal. The transmission resources may include one or more of time domain resources, frequency domain resources, and spatial domain resources. Taking the target signal including the pilot signal as an example, the transmission pattern of the target signal may be the transmission pattern of the pilot signal.

In some implementations, the transmission mode of the target signal may include one or more of the following: an identification of the transmission pattern of the target signal, a parameter of the transmission pattern of the target signal, and a matrix corresponding to the transmission pattern of the target signal (e.g., the matrix **S** described above). In some scenarios, the above information may also be referred to as receiver configuration information, where the receiver is a receiver that receives signals based on an AI model.

In some implementations, in a case that managing the first model includes falling back from the first model to a target reception mode, the configuration information includes configuration information of the target reception mode.

In some implementations, the configuration information is used to configure a transmission mode of the target signal associated with the target reception mode. Here, the transmission mode of the target signal may be indicated by a transmission pattern of the target signal, where the transmission pattern of the target signal indicates transmission resources available for transmitting the target signal. The transmission resources may include one or more of time domain resources, frequency domain resources, and spatial domain resources. Taking the target signal including the pilot signal as an example, the transmission pattern of the target signal may be the transmission pattern of the conventional pilot signal.

In some implementations, the transmission mode of the target signal may include one or more of the following: an identification of the transmission pattern of the target signal, a parameter of the transmission pattern of the target signal, and a matrix corresponding to the transmission pattern of the target signal (e.g., the matrix **S** described above). In some scenarios, the above information may also be referred to as receiver configuration information, where the receiver is a conventional receiver that receives signals based on a non-AI model.

In some implementations, in a case that managing the first model includes maintaining use of the first model to receive the target signal, the configuration information includes configuration information for monitoring the first model. For example, the configuration information may be used to configure the first condition described above. The configuration information may include parameters required for several determination modes described above.

In the embodiments of the present disclosure, the first device may be a sending end of the target signal, and the second device may be a receiving end of the target device. In some embodiments, the first model is located at the second device.

**Example 4:** the first information indicates allowing or denying management of the first model.

In some implementations, the method includes: a first device determines to allow or deny management of the first model. The above operation S1110 includes: in response to allowing the management of the first model, the first device sends the first information to the second device.

In the embodiments of the present disclosure, the first device may be a sending end of the target signal, and the second device may be a receiving end of the target device. In some embodiments, the first model is located at the second device.

**Example 5:** The first information includes a monitoring result of monitoring the first model.

In some implementations, the monitoring result of the first model is related to a function of the first model. Taking the first model used for channel estimation and data recovery as an example, the monitoring result of the first model may include one or more of the following: a channel estimation mean square error (MSE), a normalized mean square error (NMSE), a symbol detection block error rate (BLER), or a bit error ratio (BER), and the like.

In some implementations, the above monitoring results may be used to determine whether to manage the first model. That is, the method further includes: the second device determines, based on the monitoring result, whether to manage the first model. Accordingly, in response to determining to manage the first model, the second device sends second information to the first device, where the second information indicates management of the first model.

The first information in the embodiments of the present disclosure has been described above in conjunction with Examples 1 to 5. In some scenarios, the first information may be used alone, and in some scenarios, the first information may be used in combination with each other. A scheme of combining the above first information with each other will be described below with reference to FIGS. 12 to 19.

In order to facilitate distinguishing the above examples of the first information, the first information in Example 1 may be referred to as "first indication information" or "fourth indication information". The fourth indication information may be used only to indicate a management result of managing the first model. The first indication information, in addition to carrying the above management result, may also carry other information in Example 1, for example, one or more of: information of the second model, update information, or information of the target reception mode. The first information in Example 2 may be referred to as "second indication information", "fifth indication information", or "eighth indication information". The first information in Example 3 may be referred to as "third indication information". The first information in Example 4 may be referred to as "sixth indication information". The first information in Example 5 may be referred to as "seventh indication information".

FIG. 12 is a schematic flowchart of a method for wireless communication according to the embodiments of the present disclosure. It is assumed that the receiving end autonomously triggers the determination mode, autonomously determines whether to allow management of the first model and autonomously configures configuration information required for managing the first model. The method illustrated in FIG. 12 includes operations S1210 to S1240.

In operation S1210, the receiving end determines whether the first condition is met.

In operation S1220, in a case that the first condition is met, the receiving end determines to allow or deny to manage the first model.

In operation S1230, in a case that the management of the first model is allowed, the receiving end manages the first model. Here, the management of the first model may include any of the above-described management modes.

In operation S1240, the receiving end sends the first indication information to the sending end to indicate the management result of managing the first model.

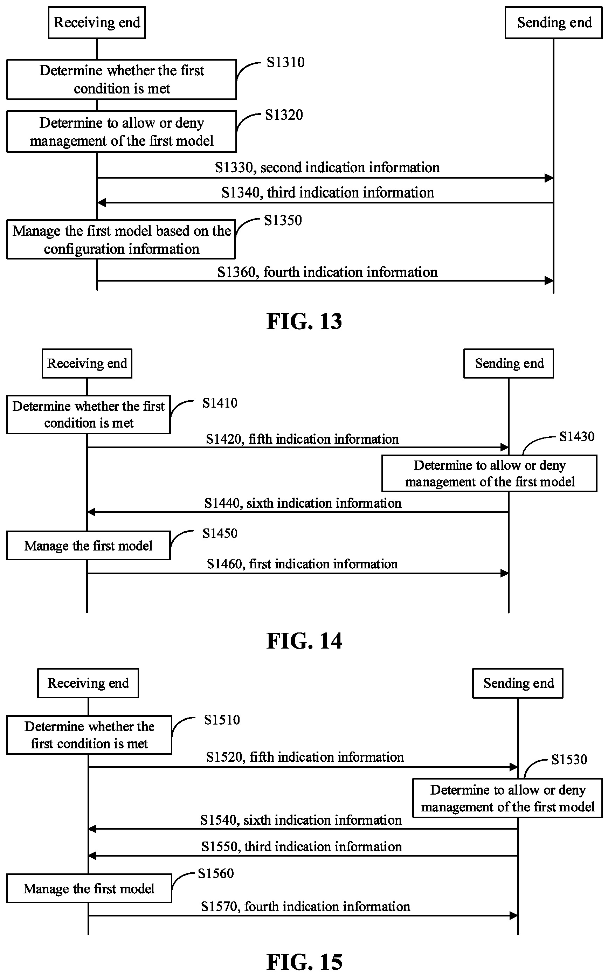

FIG. 13 is a schematic flowchart of a method for wireless communication according to the embodiments of the present disclosure. It is assumed that the receiving end autonomously triggers the determination mode, autonomously determines whether to allow management of the first model, the sending end configures configuration information required for managing the first model for the receiving end. The method illustrated in FIG. 13 includes operations S1310 to S1360.

In operation S1310, the receiving end determines whether the first condition is met.

In operation S1320, in a case that the first condition is met, the receiving end determines to allow or deny to manage the first model.

In operation S1330, in a case that the management of the first model is allowed, the receiving end sends the second indication information to the sending end to indicate the management mode for managing the first model.

In operation S1340, the sending end sends third indication information to the receiving end to indicate configuration information required for managing the first model. The configuration information indicated by the third indication information is associated with the management mode in the second indication information.

In operation S1350, the receiving end manages the first model based on the configuration information.

In operation S1360, the receiving end sends the fourth indication information to the sending end to indicate the management result of managing the first model.

FIG. 14 is a schematic flowchart of a method for wireless communication according to the embodiments of the present disclosure. Assuming that the receiving end autonomously triggers the determination mode and autonomously configures the configuration information required for managing the first model, the sending end determines whether to allow the management of the first model. The method illustrated in FIG. 14 includes operations S1410 to S1460.

In operation S1410, the receiving end determines whether the first condition is met.

In operation S1420, in a case that the first condition is met, the receiving end sends the fifth indication information to the sending end to indicate the management mode for managing the first model.

In operation S1430, the sending end determines to allow or deny to manage the first model.

In operation S1440, in a case that the management of the first model is allowed, the sending end sends sixth indication information to the receiving end to indicate that the management of the first model is allowed.

In operation S1450, in response to receiving the sixth indication information, the receiving end manages the first model.

In operation S1460, the receiving end sends the first indication information to the sending end to indicate the management result of managing the first model.

FIG. 15 is a schematic flowchart of a method for wireless communication according to the embodiments of the present disclosure. It is assumed that the receiving end autonomously triggers the determination mode, the sending end determines whether to allow management of the first model, and configures configuration information required for managing the first model for the receiving end. The method illustrated in FIG. 15 includes operations S1510 to S1570.

In operation S1510, the receiving end determines whether the first condition is met.

In operation S1520, in a case that the first condition is met, the receiving end sends the fifth indication information to the sending end to indicate the management mode for managing the first model.

In operation S1530, the sending end determines to allow or deny to manage the first model.

In operation S1540, in a case that the management of the first model is allowed, the sending end sends sixth indication information to the receiving end to indicate that the management of the first model is allowed.

In operation S1550, the sending end sends third indication information to the receiving end to indicate configuration information required for managing the first model. The configuration information indicated by the third indication information is associated with the management mode in the fifth indication information.

In operation S1560, in response to receiving the sixth indication information, the receiving end manages the first model.

In operation S1570, the receiving end sends the first indication information to the sending end to indicate the management result of managing the first model.

Note that, in the embodiments of the present disclosure, the third indication information and the sixth indication information may be independently transmitted information, and the third indication information and the sixth indication information may be combined into a single information. Alternatively, the third indication information may be used to implicitly indicate that the management of the first model is allowed, and in this case, the sixth indication information may not be transmitted anymore to improve the utilization rate of the transmission resource.

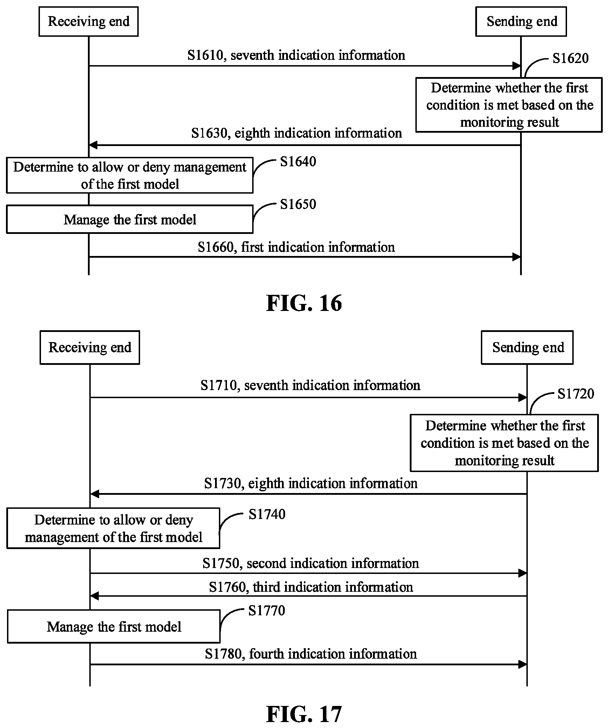

FIG. 16 is a schematic flowchart of a method for wireless communication according to the embodiments of the present disclosure. It is assumed that the sending end triggers the determination mode, the receiving end determines whether to allow management of the first model, and configures configuration information required for managing the first model. The method illustrated in FIG. 16 includes operations S1610 to S1660.

In operation S1610, the receiving end sends seventh indication information to the sending end, where the seventh indication information indicates the monitoring result of the first model.

In operation S1620, the sending end determines whether the first condition is met based on the monitoring result.

In operation S1630, in a case that the first condition is met, the sending end sends the eighth indication information to the receiving end to indicate the management mode for managing the first model.

In operation S1640, the receiving end determines to allow or deny to manage the first model.

In operation S1650, in a case that the management of the first model is allowed, the receiving end manages the first model.

In operation S1660, the receiving end sends the first indication information to the sending end to indicate the management result of managing the first model.

FIG. 17 is a schematic flowchart of a method for wireless communication according to the embodiments of the present disclosure. Assuming that the sending end triggers the determination mode and configures the configuration information required for managing the first model for the receiving end, the receiving end determines whether to allow the management of the first model. The method illustrated in FIG. 17 includes operations S1710 to S1780.

In operation S1710, the receiving end sends seventh indication information to the sending end, where the seventh indication information indicates the monitoring result of the first model.

In operation S1720, the sending end determines whether the first condition is met based on the monitoring result.

In operation S1730, in a case that the first condition is met, the sending end sends the eighth indication information to the receiving end to indicate the management mode for managing the first model.

In operation S1740, the receiving end determines to allow or deny to manage the first model.

In operation S1750, in a case that the management of the first model is allowed, the receiving end sends the second indication information to the sending end to indicate that the management of the first model is allowed.

In operation S1760, the sending end sends third indication information to the receiving end to indicate configuration information required for managing the first model. The configuration information indicated by the third indication information is associated with the management mode in the second indication information.

In operation S1770, the receiving end manages the first model.

In operation S1780, the receiving end sends the fourth indication information to the sending end to indicate the management result of managing the first model.

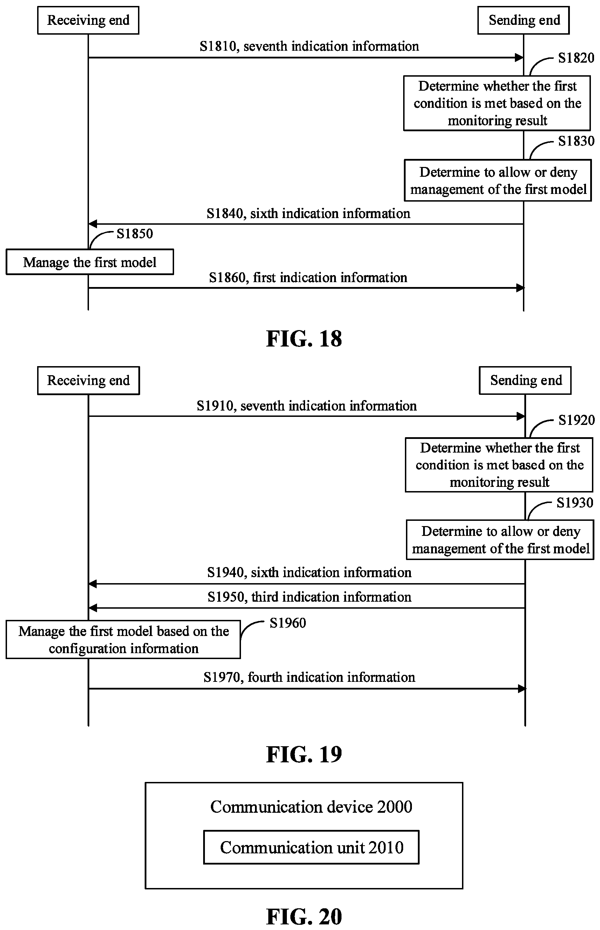

FIG. 18 is a schematic flowchart of a method for wireless communication according to the embodiments of the present disclosure. It is assumed that the sending end triggers the determination mode, and determines whether to allow management of the first model, the receiving end autonomously configures configuration information required for managing the first model. The method illustrated in FIG. 18 includes operations S1810 to S1860.

In operation S1810, the receiving end sends seventh indication information to the sending end, where the seventh indication information indicates the monitoring result of the first model.

In operation S1820, the sending end determines whether the first condition is met based on the monitoring result.

In operation S1830, in a case that the first condition is met, determining to allow or deny to manage the first model.

In operation S1840, in a case that the management of the first model is allowed, the sending end sends sixth indication information to the receiving end to indicate that the management of the first model is allowed.

In operation S1850, in response to receiving the sixth indication information, the receiving end manages the first model.

In operation S1860, the receiving end sends the first indication information to the sending end to indicate the management result of managing the first model.

FIG. 19 is a schematic flowchart of a method for wireless communication according to the embodiments of the present disclosure. It is assumed that the sending end triggers the determination mode, and determines whether to allow management of the first model, the sending end configures configuration information required for managing the first model for the receiving end. The method illustrated in FIG. 19 includes operations S1910 to S1960.

In operation S1910, the receiving end sends seventh indication information to the sending end, where the seventh indication information indicates the monitoring result of the first model.

In operation S1920, the sending end determines whether the first condition is met based on the monitoring result.

In operation S1930, in a case that the first condition is met, determining to allow or deny to manage the first model.

In operation S1940, in a case that the management of the first model is allowed, the sending end sends sixth indication information to the receiving end to indicate that the management of the first model is allowed.

In operation S1950, the sending end sends third indication information to the receiving end to indicate configuration information required for managing the first model.

In operation S1960, the receiving end manages the first model based on the configuration information.

In operation S1960, the receiving end sends the fourth indication information to the sending end to indicate the management result of managing the first model.

Note that, in the embodiments of the present disclosure, the third indication information and the sixth indication information may be independently transmitted information, and the third indication information and the sixth indication information may be combined into a single information. Alternatively, the third indication information may be used to implicitly indicate that the management of the first model is allowed, and in this case, the sixth indication information may not be transmitted anymore to improve the utilization rate of the transmission resource.

In an embodiment of the present disclosure, any of the above-described information may be carried by one or more of the following message types: an NR positioning protocol A (NRPPa) message, a long term evolution positioning protocol (LPP) message, a non-access stratum (NAS) message, an RRC message, a MAC CE, DCI, uplink control information (UCI), a physical uplink control channel (PUCCH), a physical uplink shared channel (PUSCH), an Inter-node message, an Xn interface message, an F1 interface message, an E1 interface message, an NG interface message, a core network service architecture-based message, or an AI-dedicated message.

In the embodiments of the present disclosure, any of the above-described information may be carried by one or more of a unicast message, a multicast message, or a broadcast message.

The above-described unicast message can be understood as one-to-one transmission information, that is, a message sent from one sending end to one receiving end. In this case, the source transmits the unicast message through the unicast channel, and only the terminal device or network device to which the corresponding unicast resource is allocated can attempt to receive the unicast message, and the unicast message may also be called dedicated signaling.

The above-described multicast message can be understood as one-to-many transmission information, that is, a message sent from one sending end to multiple receiving ends. In this case, the source transmits a multicast message through a multicast channel, and terminal devices or network devices that are within the multicast signal coverage and are members of the group can attempt to receive the multicast message, and when the terminal devices or the network devices join a group, they will obtain resources related to the multicast channel.

The above-described broadcast message can be understood as a pair of arbitrarily transmitted information, that is, a message sent from one sending end to any receiving end. In this case, the source transmits the broadcast message through the broadcast channel, and any terminal device or network device within the coverage range of the broadcast signal can attempt to receive the broadcast message.

In the embodiments of the present disclosure, the first device and/or the second device are not limited. For example, the first device is a terminal device, and the second device is a network device. For another example, the first device is a network device, and the second device is a terminal device. For another example, the first device is a first terminal device, and the second device is a second terminal device. For another example, the first device is a first network device, and the second device is a second network device.

The network device is an access network device or a core network device or an AI/ML model related information management device or an operation administration and maintenance (OAM) device. Exemplarily, the access network device is any one of: a gNB, a centralized unit (CU), a distributed unit (DU), a centralized unit-control plane (CU-CP), or a centralized unit-user plane (CU-UP).

Exemplarily, the core network device is any one of: a location management function (LMF) network element, a network slice selection function (NSSF), an authentication server function (AUSF), a unified data management function (UDM), an access and mobility management function (AMF), a session management function (SMF), a policy control function (PCF), a user plane function (UPF), a sensing function (SF), or a network data analysis function (NWDAF) network element.

Method embodiments of the present disclosure are described in detail with reference to FIGS. 1 to 19, and device embodiments of the present disclosure are described in detail below with reference to FIGS. 20 to 22. It should be understood that the description of the method embodiments and the description of the device embodiments correspond to each other, and therefore, the portions not described in detail can be referred to the foregoing method embodiments.

FIG. 20 is a schematic diagram of a communication device according to an embodiment of the present disclosure. A communication device 2000 illustrated in FIG. 20 is a first device, the communication device 2000 includes a communication unit 2010.

The communication unit 2010 is configured to send first information to a second device, the first information being used to manage a first model, and the first model being used to receive a target signal.

In some implementations, the first information indicates a management result of managing the first model.

In some implementations, in a case that managing the first model includes switching the first model to a second model, the first information indicates that switching to the second model is successful, or the first information indicates that switching to the second model is failed.

In some implementations, in a case that the first information indicates that switching to the second model is successful, the first information includes information of the second model.

In some implementations, the information of the second model includes one or more of the following: an identification of the second model; parameters of the second model; or a transmission mode of the target signal associated with the second model.

In some implementations, in a case that managing the first model includes updating the first model, the first information indicates that update of the first model is successful, or the first information indicates that the update of the first model is failed.

In some implementations, in a case that the first information indicates that the update of the first model is successful, the first information includes update information, and the update information includes information of an updated first model.

In some implementations, the update information includes one or more of the following: hyperparameters of the updated first model; or a transmission mode of the target signal associated with the updated first model.

In some implementations, in a case that managing the first model includes **falling back** from the first model to a target reception mode, the first information indicates that fallback to the target reception mode is successful, or the first information indicates that the fallback to the target reception mode is failed.

In some implementations, in a case that the first information indicates that the fallback to the target reception mode is successful, the first information includes information of the target reception mode.

In some implementations, the information of the target reception mode includes one or more of the following: configuration information of the target reception mode; or a transmission mode of the target signal associated with the target reception mode.

In some implementations, in a case that managing the first model includes maintaining use of the first model to receive the target signal, the first information indicates that maintaining the use of the first model to receive the target signal is successful, or the first information indicates that maintaining the use of the first model to receive the target signal is failed.

In some implementations, in a case that the first information indicates that maintaining the use of the first model to receive the target signal is successful, the first information includes information for monitoring the first model.

In some implementations, the first information indicates a target event performed to manage the first model.

In some implementations, the target event includes an event that performs one or more of: an event for switching the first model; an event for updating the first model; an event for falling back from the first model; or an event for maintaining signal reception based on the first model.

In some implementations, the communication device further includes: a first processing unit, configured to determine to allow or deny management of the first model. Where the communication unit is configured to send the first information to the second device in response to allowing the management of the first model.

In some implementations, the first information includes configuration information associated with managing the first model.

In some implementations, in a case that managing the first model includes switching the first model to a second model, the first information includes configuration information of the second model; in a case that managing the first model includes updating the first model, the configuration information is used to update the first model; in a case that managing the first model includes falling back from the first model to a target reception mode, the configuration information includes configuration information of the target reception mode; and in a case that managing the first model includes maintaining use of the first model to receive the target signal, the configuration information includes configuration information for monitoring the first model.

In some implementations, the first information indicates allowing or denying management of the first model.

In some implementations, the communication device includes: a second processing unit, configured to determine to allow or deny management of the first model. Where the communication unit is configured to send the first information to the second device in response to allowing the management of the first model.

In some implementations, the first information includes a monitoring result of monitoring the first model.

In some implementations, the communication unit is configured to receive second information from the second device in a case of determining, based on the monitoring result, to manage the first model, where the second information indicates management of the first model.

In some implementations, the management of the first model is triggered based on a first condition, where the first condition is associated with reception performance of the target signal.

In some implementations, in a case that the target signal includes a pilot signal, the reception performance of the target signal includes an accuracy of channel state information obtained based on the pilot signal; and in a case that the target signal includes a data signal, the reception performance of the target signal includes an accuracy rate of data obtained based on the target signal.

In some implementations, the first condition includes one of: the reception performance of the target signal is less than a reception performance threshold; within a target time period, a first duration is greater than a time threshold, the first duration being a duration during which the reception performance of the target signal is less than the reception performance threshold; within the target time period, a first count is greater than a count threshold, the first count being a count that the reception performance of the target signal is less than the reception performance threshold; a second duration is greater than the time threshold, the second duration being a duration during which the reception performance of the target signal is less than the reception performance threshold; or a second count is greater than the count threshold, the second count being a count that the reception performance of the target signal is less than the reception performance threshold.

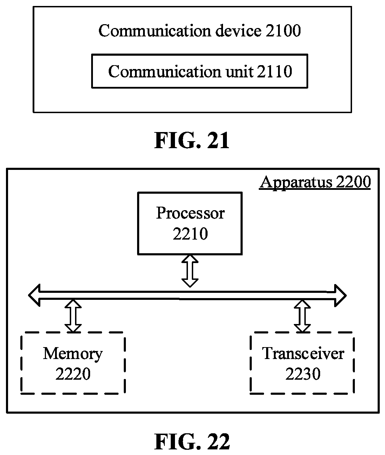

FIG. 21 is a schematic diagram of a communication device according to another embodiment of the present disclosure. The communication device 2100 illustrated in FIG. 21 may be a second device, and the communication device 2100 includes a communication unit 2110.

The communication unit 2110 is configured to receive first information from a first device, the first information being used to manage a first model, and the first model being used to receive a target signal.

In some implementations, the first information indicates a management result of managing the first model.

In some implementations, in a case that managing the first model includes switching the first model to a second model, the first information indicates that switching to the second model is successful, or the first information indicates that switching to the second model is failed.

In some implementations, in a case that the first information indicates that switching to the second model is successful, the first information includes information of the second model.

In some implementations, the information of the second model includes one or more of the following: an identification of the second model; parameters of the second model; or a transmission mode of the target signal associated with the second model.

In some implementations, in a case that managing the first model includes updating the first model, the first information indicates that update of the first model is successful, or the first information indicates that the update of the first model is failed.

In some implementations, in a case that the first information indicates that the update of the first model is successful, the first information includes update information, and the update information includes information of an updated first model.

In some implementations, the update information includes one or more of the following: hyperparameters of the updated first model; or a transmission mode of the target signal associated with the updated first model.

In some implementations, in a case that managing the first model includes falling back from the first model to a target reception mode, the first information indicates that fallback to the target reception mode is successful, or the first information indicates that the fallback to the target reception mode is failed.

In some implementations, in a case that the first information indicates that the fallback to the target reception mode is successful, the first information includes information of the target reception mode.

In some implementations, the information of the target reception mode includes one or more of the following: configuration information of the target reception mode; or a transmission mode of the target signal associated with the target reception mode.

In some implementations, in a case that managing the first model includes maintaining use of the first model to receive the target signal, the first information indicates that maintaining the use of the first model to receive the target signal is successful, or the first information indicates that maintaining the use of the first model to receive the target signal is failed.

In some implementations, in a case that the first information indicates that maintaining the use of the first model to receive the target signal is successful, the first information includes information for monitoring the first model.

In some implementations, the first information indicates a target event performed to manage the first model.

In some implementations, the target event includes an event that performs one or more of: an event for switching the first model; an event for updating the first model; an event for falling back from the first model; or an event for maintaining signal reception based on the first model.

In some implementations, the communication device further includes: a first processing unit, configured to determine to allow or deny management of the first model in response to receiving the first information.

In some implementations, the first information includes configuration information associated with managing the first model.

In some implementations, in a case that managing the first model includes switching the first model to a second model, the first information includes configuration information of the second model; in a case that managing the first model includes updating the first model, the configuration information is used to update the first model; in a case that managing the first model includes falling back from the first model to a target reception mode, the configuration information includes configuration information of the target reception mode; and in a case that managing the first model includes maintaining use of the first model to receive the target signal, the configuration information includes configuration information for monitoring the first model.

In some implementations, the first information indicates allowing or denying management of the first model.

In some implementations, the communication device further includes: a second processing unit, configured to manage the first model in response to receiving the first information.

In some implementations, the first information includes a monitoring result of monitoring the first model.

In some implementations, the communication device further includes: a third processing unit, configured to determine, based on the monitoring result, whether to manage the first model.

In some implementations, the communication device further includes: in response to determining to manage the first model, sending, by the second device, second information to the first device, where the second information indicates management of the first model.

In some implementations, the management of the first model is triggered based on a first condition, the first condition being associated with a reception performance of the target signal.

In some implementations, in a case that the target signal includes a pilot signal, the reception performance of the target signal includes an accuracy of channel state information obtained based on the pilot signal; and in a case that the target signal includes a data signal, the reception performance of the target signal includes an accuracy rate of data obtained based on the target signal.

In some implementations, the first condition includes one of: the reception performance of the target signal is less than a reception performance threshold; within a target time period, a first duration is greater than a time threshold, the first duration being a duration during which the reception performance of the target signal is less than the reception performance threshold; within the target time period, a first count is greater than a count threshold, the first count being a count that the reception performance of the target signal is less than the reception performance threshold; a second duration is greater than the time threshold, the second duration being a duration during which the reception performance of the target signal is less than the reception performance threshold; or a second count is greater than the count threshold, the second count being a count that the reception performance of the target signal is less than the reception performance threshold.

In an alternative embodiment, the communication unit 2010 may be a transceiver 2230. The communication device 2000 may also include a processor 2210 and a memory 2220, as specifically shown in FIG. 22.

In an alternative embodiment, the communication unit 2110 may be a transceiver 2230. The communication device 2000 may also include a processor 2210 and a memory 2220, as specifically shown in FIG. 22.

FIG. 22 is a schematic diagram of a communication apparatus according to an embodiment of the present disclosure. The dashed line in FIG. 22 indicates that the unit or module is optional. The apparatus 2200 may be used to implement the method described in the above method embodiments. The apparatus 2200 may be a chip, a terminal device, or a network device.

The apparatus 2200 may include one or more processors 2210. The processor 2210 may support the apparatus 2200 to implement the methods described in the previous method embodiments. The processor 2210 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA), or other programmable logic device, a discrete gate or transistor logic device, a discrete hardware component, or the like. The general-purpose processor may be a microprocessor or the processor may be any conventional processor or the like.

The apparatus 2200 may also include one or more memories 2220. The memory 2220 has stored a program that can be executed by the processor 2210 to cause the processor 2210 to perform the method described in the above method embodiments. The memory 2220 may be independent of the processor 2210 or may be integrated in the processor 2210.

The apparatus 2200 may also include a transceiver 2230. The processor 2210 may communicate with other devices or chips through the transceiver 2230. For example, the processor 2210 may transmit and receive data with other devices or chips through the transceiver 2230.

The embodiment of the present disclosure also provides a computer-readable storage medium for storing a program. The computer-readable storage medium can be applied to a terminal or a network device provided by the embodiments of the present disclosure, and the program causes a computer to perform the method performed by the terminal or the network device in each embodiment of the present disclosure.

The embodiments of the present disclosure also provide a computer program product. The computer program product includes a program. The computer program product can be applied to a terminal or a network device provided by the embodiments of the present disclosure, and the program causes a computer to perform the method performed by the terminal or the network device in each embodiment of the present disclosure.

The embodiments of the present disclosure also provide a computer program. The computer program can be applied to a terminal or a network device provided by the embodiments of the present disclosure, and the computer program causes a computer to perform the method performed by the terminal or the network device in each embodiment of the present disclosure.

It is to be understood that the terms "system" and "network" may be used interchangeably in the present disclosure. In addition, the terminology used in the present disclosure is for explanation of specific embodiments of the present disclosure only, and is not intended to limit the present disclosure. The terms "first", "second", "third", and "fourth", etc. in the specification and claims of the present disclosure and the drawings are used to distinguish different objects, and are not used to describe a specific order. Furthermore, the terms "comprising" and "having" and any variations thereof are intended to cover non-exclusive inclusions.

In the embodiments of the present disclosure, the "indication" mentioned may be a direct indication, an indirect indication, or an associated relationship. For example, A indicates B, which may mean that A directly indicates B, for example, B can be acquired by A. It may also mean that A indicates B indirectly, for example, A indicates C, and B can be acquired through C. It may also be indicated that there is an association relationship between A and B.

In the embodiments of the present disclosure, "B corresponding to A" means that B is associated with A, and B can be determined from A. However, it should also be understood that determining B from A does not mean that B is determined from A alone, and that B may also be determined from A and/or other information.

In the embodiments of the present disclosure, the term "correspondence" may indicate that there is a direct correspondence or indirect correspondence relationship between the two, may indicate that there is a correlation relationship between the two, or may indicate a relationship between indicating and being indicated, configuring and being configured, or the like.

In the embodiments of the present disclosure, "predefined" or "pre-configured" may be realized by storing corresponding codes, tables, or other manners that can be used to indicate relevant information in a device (including, for example, a terminal device and a network device) in advance, and the present disclosure does not limit the specific implementation method thereof. For example, predefined may refer to defined in the protocol.

In the embodiment of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiments of the present disclosure is only an association relationship describing an association object, and indicates that there may be three kinds of relationships, for example, A and/or B, which may indicate that A exists alone, A and B exist simultaneously, and B exists alone. In addition, the character "/" in this article generally indicates that the related objects before and after are in an "or" relationship.

In the various embodiments of the disclosure, the size of the serial number of the above-mentioned processes does not mean the order of execution, and the execution order of each process should be determined by its function and internal logic, and should not constitute any limitation to the implementation process of the embodiments of the disclosure.

In several embodiments provided herein, it should be appreciated that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solution of the embodiments.

In addition, each functional unit in each embodiment of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general-purpose computer, a dedicated computer, a computer network, or other programmable device. The computer instructions may be stored in a computer-readable storage medium or transmitted from one computer-readable storage medium to another computer-readable storage medium. For example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that can be read by a computer or a data storage device such as a server, a data center, or the like that incorporates one or more available media integrations. The available media may be magnetic media (e.g., a floppy disk, a hard disk, a magnetic tape), optical media (e.g., digital video disc (DVD)), or semiconductor media (e.g., solid state disk (SSD)), etc.

The above are only the specific implementations of the disclosure, but the protection scope of the disclosure is not limited to this. Any person skilled in the art can easily think of changes or substitutions within the technical scope disclosed in the disclosure, and they should be covered by the protection scope of the disclosure. Therefore, the protection scope of the disclosure should be subject to the protection scope of the claims.

## Claims

1. A method for wireless communication, comprising:
   sending, by a first device, first information to a second device, the first information being used to manage a first model, and the first model being used to receive a target signal.

2. The method of claim 1, wherein the first information indicates a management result of managing the first model.

3. The method of claim 2, wherein in a case that managing the first model comprises switching the first model to a second model, the first information indicates that switching to the second model is successful, or the first information indicates that switching to the second model is failed.

4. The method of claim 3, wherein in a case that the first information indicates that switching to the second model is successful, the first information comprises information of the second model.

5. The method of claim 4, wherein the information of the second model comprises one or more of:

   an identification of the second model;
   parameters of the second model; or
   a transmission mode of the target signal associated with the second model.

6. The method of claim 2, wherein in a case that managing the first model comprises updating the first model, the first information indicates that update of the first model is successful, or the first information indicates that the update of the first model is failed.

7. The method of claim 6, wherein in a case that the first information indicates that the update of the first model is successful, the first information comprises update information, and the update information comprises information of an updated first model.

8. The method of claim 7, wherein the update information comprises one or more of:

   hyperparameters of the updated first model; or
   a transmission mode of the target signal associated with the updated first model.

9. The method of claim 2, wherein in a case that managing the first model comprises falling back from the first model to a target reception mode, the first information indicates that fallback to the target reception mode is successful, or the first information indicates that the fallback to the target reception mode is failed.

10. The method of claim 9, wherein in a case that the first information indicates that the fallback to the target reception mode is successful, the first information comprises information of the target reception mode.

11. The method of claim 10, wherein the information of the target reception mode comprises one or more of:

configuration information of the target reception mode; or

a transmission mode of the target signal associated with the target reception mode.

12. The method of claim 2, wherein in a case that managing the first model comprises maintaining use of the first model to receive the target signal, the first information indicates that maintaining the use of the first model to receive the target signal is successful, or the first information indicates that maintaining the use of the first model to receive the target signal is failed.

13. The method of claim 12, wherein in a case that the first information indicates that maintaining the use of the first model to receive the target signal is successful, the first information comprises information for monitoring the first model.

14. The method of claim 1, wherein the first information indicates a target event performed to manage the first model.

15. The method of claim 14, wherein the target event comprises an event that performs one or more of: an event for switching the first model; an event for updating the first model; an event for falling back from the first model; or an event for maintaining signal reception based on the first model.

16. The method of claim 14 or 15, further comprising:

determining, by the first device, to allow or deny management of the first model, wherein sending, by the first device, the first information to the second device comprises: in response to allowing the management of the first model, sending, by the first device, the first information to the second device.

17. The method of claim 1, wherein the first information comprises configuration information associated with managing the first model.

18. The method of claim 17, wherein in a case that managing the first model comprises switching the first model to a second model, the first information comprises configuration information of the second model;

in a case that managing the first model comprises updating the first model, the configuration information is used to update the first model; in a case that managing the first model comprises falling back from the first model to a target reception mode, the configuration information comprises configuration information of the target reception mode; and

in a case that managing the first model comprises maintaining use of the first model to receive the target signal, the configuration information comprises configuration information for monitoring the first model.

19. The method of claim 1, wherein the first information indicates allowing or denying management of the first model.

20. The method of claim 19, further comprising:

determining, by the first device, to allow or deny the management of the first model, wherein sending, by the first device, the first information to the second device comprises: in response to allowing the management of the first model, sending, by the first device, the first information to the second device.

21. The method of claim 1, wherein the first information comprises a monitoring result of monitoring the first model.

22. The method of claim 21, further comprising: in a case of determining, based on the monitoring result, to manage the first model, receiving, by the first device, second information from the second device, wherein the second information indicates management of the first model.

23. The method of any one of claims 1-22, wherein management of the first model is triggered based on a first condition, the first condition being associated with a reception performance of the target signal.

24. The method of claim 23, wherein in a case that the target signal comprises a pilot signal, the reception performance of the target signal comprises an accuracy of channel state information obtained based on the pilot signal; and

in a case that the target signal comprises a data signal, the reception performance of the target signal comprises an accuracy rate of data obtained based on the target signal.

25. The method of claim 23 or 24, wherein the first condition comprises one of:

the reception performance of the target signal is less than a reception performance threshold; within a target time period, a first duration is greater than a time threshold, the first duration being a duration during which the reception performance of the target signal is less than the reception performance threshold;

within the target time period, a first count is greater than a count threshold, the first count being a count that the reception performance of the target signal is less than the reception performance threshold;

a second duration is greater than the time threshold, the second duration being a duration during which the reception performance of the target signal is less than the reception performance threshold; or

a second count is greater than the count threshold, the second count being a count that the reception performance of the target signal is less than the reception performance threshold.

26. A method for wireless communication, comprising: receiving, by a second device, first information from a first device, the first information being used to manage a first model, and the first model being used to receive a target signal.

27. The method of claim 26, wherein the first information indicates a management result of managing the first model.

28. The method of claim 27, wherein in a case that managing the first model comprises switching the first model to a second model, the first information indicates that switching to the second model is successful, or the first information indicates that switching to the second model is failed.

29. The method of claim 28, wherein in a case that the first information indicates that switching to the second model is successful, the first information comprises information of the second model.

30. The method of claim 29, wherein the information of the second model comprises one or more of:

an identification of the second model;
parameters of the second model; or
a transmission mode of the target signal associated with the second model.

31. The method of claim 27, wherein in a case that managing the first model comprises updating the first model, the first information indicates that update of the first model is successful, or the first information indicates that the update of the first model is failed.

32. The method of claim 31, wherein in a case that the first information indicates that the update of the first model is successful, the first information comprises update information, and the update information comprises information of an updated first model.

33. The method of claim 32, wherein the update information comprises one or more of:

hyperparameters of the updated first model; or
a transmission mode of the target signal associated with the updated first model.

34. The method of claim 27, wherein in a case that managing the first model comprises falling back from the first model to a target reception mode, the first information indicates that fallback to the target reception mode is successful, or the first information indicates that the fallback to the target reception mode is failed.

35. The method of claim 34, wherein in a case that the first information indicates that the fallback to the target reception mode is successful, the first information comprises information of the target reception mode.

36. The method of claim 35, wherein the information of the target reception mode comprises one or more of:

configuration information of the target reception mode; or
a transmission mode of the target signal associated with the target reception mode.

37. The method of claim 27, wherein in a case that managing the first model comprises maintaining use of the first model to receive the target signal, the first information indicates that maintaining the use of the first model to receive the target signal is successful, or the first information indicates that maintaining the use of the first model to receive the target signal is failed.

38. The method of claim 37, wherein in a case that the first information indicates that maintaining the use of the first model to receive the target signal is successful, the first information comprises information for monitoring the first model.

39. The method of claim 26, wherein the first information indicates a target event performed to manage the first model.

40. The method of claim 39, wherein the target event comprises an event that performs one or more of: an event for switching the first model; an event for updating the first model; an event for falling back from the first model; or an event for maintaining signal reception based on the first model.

41. The method of claim 39 or 40, further comprising: in response to receiving the first information, determining, by the first device, to allow or deny management of the first model.

**42.** The method of claim 26, wherein the first information comprises configuration information associated with managing the first model.

**43.** The method of claim 42, wherein in a case that managing the first model comprises switching the first model to a second model, the first information comprises configuration information of the second model;

in a case that managing the first model comprises updating the first model, the configuration information is used to update the first model;
in a case that managing the first model comprises falling back from the first model to a target reception mode, the configuration information comprises configuration information of the target reception mode; and
in a case that managing the first model comprises maintaining use of the first model to receive the target signal, the configuration information comprises configuration information for monitoring the first model.

**44.** The method of claim 26, wherein the first information indicates allowing or denying management of the first model.

**45.** The method of claim 44, further comprising:
in response to receiving the first information, managing, by the second device, the first model.

**46.** The method of claim 26, wherein the first information comprises a monitoring result of monitoring the first model.

**47.** The method of claim 46, further comprising:
determining, by the second device based on the monitoring result, whether to manage the first model.

**48.** The method of claim 47, further comprising:
in response to determining to manage the first model, sending, by the second device, second information to the first device, wherein the second information indicates management of the first model.

**49.** The method of any one of claims 26-48, wherein management of the first model is triggered based on a first condition, the first condition being associated with a reception performance of the target signal.

**50.** The method of claim 49, wherein in a case that the target signal comprises a pilot signal, the reception performance of the target signal comprises an accuracy of channel state information obtained based on the pilot signal; and
in a case that the target signal comprises a data signal, the reception performance of the target signal comprises an accuracy rate of data obtained based on the target signal.

**51.** The method of claim 49 or 50, wherein the first condition comprises one of:

the reception performance of the target signal is less than a reception performance threshold;
within a target time period, a first duration is greater than a time threshold, the first duration being a duration during which the reception performance of the target signal is less than the reception performance threshold;
within the target time period, a first count is greater than a count threshold, the first count being a count that the reception performance of the target signal is less than the reception performance threshold;
a second duration is greater than the time threshold, the second duration being a duration during which the reception performance of the target signal is less than the reception performance threshold; or
a second count is greater than the count threshold, the second count being a count that the reception performance of the target signal is less than the reception performance threshold.

**52.** A communication device, wherein the communication device is a first device, comprising:
a communication unit, configured to send first information to a second device, the first information being used to manage a first model, and the first model being used to receive a target signal.

**53.** The communication device of claim 52, wherein the first information indicates a management result of managing the first model.

**54.** The communication device of claim 53, wherein in a case that managing the first model comprises switching the first model to a second model, the first information indicates that switching to the second model is successful, or the first information indicates that switching to the second model is failed.

**55.** The communication device of claim 54, wherein in a case that the first information indicates that switching to the second model is successful, the first information comprises information of the second model.

**56.** The communication device of claim 55, wherein the information of the second model comprises one or more of:

an identification of the second model;
parameters of the second model; or
a transmission mode of the target signal associated with the second model.

57. The communication device of claim 53, wherein in a case that managing the first model comprises updating the first model, the first information indicates that update of the first model is successful, or the first information indicates that the update of the first model is failed.

58. The communication device of claim 57, wherein in a case that the first information indicates that the update of the first model is successful, the first information comprises update information, and the update information comprises information of an updated first model.

59. The communication device of claim 58, wherein the update information comprises one or more of:

hyperparameters of the updated first model; or
a transmission mode of the target signal associated with the updated first model.

60. The communication device of claim 53, wherein in a case that managing the first model comprises falling back from the first model to a target reception mode, the first information indicates that fallback to the target reception mode is successful, or the first information indicates that the fallback to the target reception mode is failed.

61. The communication device of claim 60, wherein in a case that the first information indicates that the fallback to the target reception mode is successful, the first information comprises information of the target reception mode.

62. The communication device of claim 61, wherein the information of the target reception mode comprises one or more of:

configuration information of the target reception mode; or
a transmission mode of the target signal associated with the target reception mode.

63. The communication device of claim 53, wherein in a case that managing the first model comprises maintaining use of the first model to receive the target signal, the first information indicates that maintaining the use of the first model to receive the target signal is successful, or the first information indicates that maintaining the use of the first model to receive the target signal is failed.

64. The communication device of claim 63, wherein in a case that the first information indicates that maintaining the use of the first model to receive the target signal is successful, the first information comprises information for monitoring the first model.

65. The communication device of claim 52, wherein the first information indicates a target event performed to manage the first model.

66. The communication device of claim 65, wherein the target event comprises an event that performs one or more of: an event for switching the first model; an event for updating the first model; an event for falling back from the first model; or an event for maintaining signal reception based on the first model.

67. The communication device of claim 65 or 66, further comprising:

a first processing unit, configured to determine to allow or deny management of the first model, wherein the communication unit is configured to send the first information to the second device in response to allowing the management of the first model.

68. The communication device of claim 52, wherein the first information comprises configuration information associated with managing the first model.

69. The communication device of claim 68, wherein in a case that managing the first model comprises switching the first model to a second model, the first information comprises configuration information of the second model;

in a case that managing the first model comprises updating the first model, the configuration information is used to update the first model;
in a case that managing the first model comprises falling back from the first model to a target reception mode, the configuration information comprises configuration information of the target reception mode; and
in a case that managing the first model comprises maintaining use of the first model to receive the target signal, the configuration information comprises configuration information for monitoring the first model.

70. The communication device of claim 52, wherein the first information indicates allowing or denying management of the first model.

71. The communication device of claim 70, comprising:

a second processing unit, configured to determine to allow or deny the management of the first model,
wherein the communication unit is configured to send the first information to the second device in response to allowing the management of the first model.

72. The communication device of claim 52, wherein the first information comprises a monitoring result of monitoring the first model.

73. The communication device of claim 72, wherein the communication unit is configured to:
in a case of determining, based on the monitoring result, to manage the first model, receive second information from the second device, wherein the second information indicates management of the first model.

74. The communication device of any one of claims 52-73, wherein management of the first model is triggered based on a first condition, the first condition being associated with a reception performance of the target signal.

75. The communication device of claim 74, wherein in a case that the target signal comprises a pilot signal, the reception performance of the target signal comprises an accuracy of channel state information obtained based on the pilot signal; and
in a case that the target signal comprises a data signal, the reception performance of the target signal comprises an accuracy rate of data obtained based on the target signal.

76. The communication device of claim 74 or 75, wherein the first condition comprises one of:

the reception performance of the target signal is less than a reception performance threshold;
within a target time period, a first duration is greater than a time threshold, the first duration being a duration during which the reception performance of the target signal is less than the reception performance threshold;
within the target time period, a first count is greater than a count threshold, the first count being a count that the reception performance of the target signal is less than the reception performance threshold;
a second duration is greater than the time threshold, the second duration being a duration during which the reception performance of the target signal is less than the reception performance threshold; or
a second count is greater than the count threshold, the second count being a count that the reception performance of the target signal is less than the reception performance threshold.

77. A communication device, wherein the communication device is a second device, comprising:
a communication unit, configured to receive first information from a first device, the first information being used to manage a first model, and the first model being used to receive a target signal.

78. The communication device of claim 77, wherein the first information indicates a management result of managing the first model.

79. The communication device of claim 78, wherein in a case that managing the first model comprises switching the first model to a second model, the first information indicates that switching to the second model is successful, or the first information indicates that switching to the second model is failed.

80. The communication device of claim 79, wherein in a case that the first information indicates that switching to the second model is successful, the first information comprises information of the second model.

81. The communication device of claim 80, wherein the information of the second model comprises one or more of:

an identification of the second model;
parameters of the second model; or
a transmission mode of the target signal associated with the second model.

82. The communication device of claim 78, wherein in a case that managing the first model comprises updating the first model, the first information indicates that update of the first model is successful, or the first information indicates that the update of the first model is failed.

83. The communication device of claim 82, wherein in a case that the first information indicates that the update of the first model is successful, the first information comprises update information, and the update information comprises information of an updated first model.

84. The communication device of claim 83, wherein the update information comprises one or more of:

hyperparameters of the updated first model; or
a transmission mode of the target signal associated with the updated first model.

85. The communication device of claim 78, wherein in a case that managing the first model comprises falling back from the first model to a target reception mode, the first information indicates that fallback to the target reception mode is successful, or the first information indicates that the fallback to the target reception mode is failed.

86. The communication device of claim 85, wherein in a case that the first information indicates that the fallback to the target reception mode is successful, the first information comprises information of the target reception mode.

87. The communication device of claim 86, wherein the information of the target reception mode comprises one or more of:

    configuration information of the target reception mode; or
    a transmission mode of the target signal associated with the target reception mode.

88. The communication device of claim 78, wherein in a case that managing the first model comprises maintaining use of the first model to receive the target signal, the first information indicates that maintaining the use of the first model to receive the target signal is successful, or the first information indicates that maintaining the use of the first model to receive the target signal is failed.

89. The communication device of claim 88, wherein in a case that the first information indicates that maintaining the use of the first model to receive the target signal is successful, the first information comprises information for monitoring the first model.

90. The communication device of claim 77, wherein the first information indicates a target event performed to manage the first model.

91. The communication device of claim 90, wherein the target event comprises an event that performs one or more of: an event for switching the first model; an event for updating the first model; an event for falling back from the first model; or an event for maintaining signal reception based on the first model.

92. The communication device of claim 90 or 91, further comprising:
a first processing unit, configured to determine to allow or deny management of the first model in response to receiving the first information.

93. The communication device of claim 77, wherein the first information comprises configuration information associated with managing the first model.

94. The communication device of claim 93, wherein in a case that managing the first model comprises switching the first model to a second model, the first information comprises configuration information of the second model;

in a case that managing the first model comprises updating the first model, the configuration information is used to update the first model;
in a case that managing the first model comprises falling back from the first model to a target reception mode, the configuration information comprises configuration information of the target reception mode; and
in a case that managing the first model comprises maintaining use of the first model to receive the target signal, the configuration information comprises configuration information for monitoring the first model.

95. The communication device of claim 77, wherein the first information indicates allowing or denying management of the first model.

96. The communication device of claim 95, further comprising:
a second processing unit, configured to manage the first model in response to receiving the first information.

97. The communication device of claim 77, wherein the first information comprises a monitoring result of monitoring the first model.

98. The communication device of claim 97, further comprising:
a third processing unit, configured to determine, based on the monitoring result, whether to manage the first model.

99. The communication device of claim 98, further comprising:
in response to determining to manage the first model, sending, by the second device, second information to the first device, wherein the second information indicates management of the first model.

100. The communication device of any one of claims 77-99, wherein management of the first model is triggered based on a first condition, the first condition being associated with a reception performance of the target signal.

101. The communication device of claim 100, wherein in a case that the target signal comprises a pilot signal, the reception performance of the target signal comprises an accuracy of channel state information obtained based on the pilot signal; and

in a case that the target signal comprises a data signal, the reception performance of the target signal comprises an accuracy rate of data obtained based on the target signal.

**102.**

The communication device of claim 100 or 101, wherein the first condition comprises one of:

the reception performance of the target signal is less than a reception performance threshold;

within a target time period, a first duration is greater than a time threshold, the first duration being a duration during which the reception performance of the target signal is less than the reception performance threshold;

within the target time period, a first count is greater than a count threshold, the first count being a count that the reception performance of the target signal is less than the reception performance threshold;

a second duration is greater than the time threshold, the second duration being a duration during which the reception performance of the target signal is less than the reception performance threshold; or

a second count is greater than the count threshold, the second count being a count that the reception performance of the target signal is less than the reception performance threshold.

**103.**

A communication device, comprising: a transceiver, a memory, and a processor, wherein the memory is configured to store a program, and the processor is configured to invoke the program in the memory and control the transceiver to receive or send signals, to cause the communication device to perform the method of any one of claims 1-51.

**104.**

An apparatus, comprising: a processor configured to invoke a program in a memory, to cause the apparatus to perform the method of any one of claims 1-51.

**105.**

A chip, comprising: a processor configured to invoke a program in a memory, to cause a device installed with the chip to perform the method of any one of claims 1-51.

**106.**

A computer-readable storage medium having stored thereon a program that causes a computer to perform the method of any one of claims 1-51.

**107.**

A computer program product comprising a program that causes a computer to perform the method of any one of claims 1-51.

**108.**

A computer program causing a computer to perform the method of any one of claims 1-51.

FIG. 1

**FIG. 2**

☐ Resources for transmission of data signals

◩ Resources for transmission of pilot signals

**FIG. 3(a)**

☐ Resources for transmission of data signals

◩ Resources for transmission of pilot signals

**FIG. 3(b)**

☐ Resources for transmission of data signals

◩ Resources for transmission of pilot signals

Frequency domain

Time domain

**FIG. 3(c)**

$a_1$ $w_1$

$a_2$ $w_2$

⋮ $w_j$

$a_j$

1 $b$

SU $f$ $t$

**FIG. 4**

Input layer 510  Hidden layer 520  Output layer 530

**FIG. 5**

Input layer 610 → Convolutional layer 620 → Pooling layer 630 → Convolutional layer 620 → Pooling layer 630 → Fully connected layer 640 → Output layer 650

**FIG. 6**

→ represents vector transmission

○ represents a processing node

[ σ ] represents a neural network layer

⌇ represents vector connection

⌇ represents vector replication

**FIG. 7**

Receiver 800

Pilot signal ⟹ Channel estimation module 810 ⟹ Channel information

**FIG. 8**

900

**FIG. 9**

Matrix **P**  Matrix **X**  Matrix **D**  Matrix **V**  Matrix **S**

Frequency
domain

⊙  +  ⊙  =

Time
domain

**FIG. 10**

| First device | | Second device |
|---|---|---|

S1110, first information

**FIG. 11**

| Receiving end | | Sending end |
|---|---|---|

Determine whether the first condition
is met — S1210

Determine to allow or deny
management of the first model — S1220

Manage the first model — S1230

S1240, first indication information

**FIG. 12**

| Receiving end | | Sending end |

Determine whether the first condition is met — S1310

Determine to allow or deny management of the first model — S1320

S1330, second indication information →

← S1340, third indication information

Manage the first model based on the configuration information — S1350

S1360, fourth indication information →

**FIG. 13**

| Receiving end | | Sending end |

Determine whether the first condition is met — S1410

S1420, fifth indication information → — S1430

Determine to allow or deny management of the first model

← S1440, sixth indication information

Manage the first model — S1450

S1460, first indication information →

**FIG. 14**

| Receiving end | | Sending end |

Determine whether the first condition is met — S1510

S1520, fifth indication information → — S1530

Determine to allow or deny management of the first model

← S1540, sixth indication information

← S1550, third indication information

Manage the first model — S1560

S1570, fourth indication information →

**FIG. 15**

Receiving end             Sending end

S1610, seventh indication information

S1620

Determine whether the first
condition is met based on the
monitoring result

S1630, eighth indication information

Determine to allow or deny management
of the first model      S1640

Manage the first model      S1650

S1660, first indication information

**FIG. 16**

Receiving end             Sending end

S1710, seventh indication information

S1720

Determine whether the first
condition is met based on the
monitoring result

S1730, eighth indication information

Determine to allow or deny
management of the first model      S1740

S1750, second indication information

S1760, third indication information

Manage the first model      S1770

S1780, fourth indication information

**FIG. 17**

Receiving end | Sending end

S1810, seventh indication information → S1820

Determine whether the first condition is met based on the monitoring result

S1830

Determine to allow or deny management of the first model

S1840, sixth indication information

S1850

Manage the first model

S1860, first indication information

**FIG. 18**

Receiving end | Sending end

S1910, seventh indication information → S1920

Determine whether the first condition is met based on the monitoring result

S1930

Determine to allow or deny management of the first model

S1940, sixth indication information

S1950, third indication information

Manage the first model based on the configuration information | S1960

S1970, fourth indication information

**FIG. 19**

Communication device 2000

Communication unit 2010

**FIG. 20**

Communication device 2100

Communication unit 2110

**FIG. 21**

Apparatus 2200

Processor 2210

Memory 2220

Transceiver 2230

**FIG. 22**

## INTERNATIONAL SEARCH REPORT

| International application No. |
|---|
| **PCT/CN2023/113640** |

| A. | CLASSIFICATION OF SUBJECT MATTER |
|---|---|

H04L25/02(2006.01)i; H04W24/02(2009.01)i; G06N20/00(2019.01)i

According to International Patent Classification (IPC) or to both national classification and IPC

| B. | FIELDS SEARCHED |
|---|---|

Minimum documentation searched (classification system followed by classification symbols)

IPC: H04L H04W G06N

Documentation searched other than minimum documentation to the extent that such documents are included in the fields searched

Electronic data base consulted during the international search (name of data base and, where practicable, search terms used)

CNTXT: ENTXTC; WPABSC; VEN; ENTXT; CNKI; 3GPP: 模型, 匹配, 发送, 接收, 基站, 终端, 更新, 切换, 指示, 管理, 性能, 质量, AI, model, match+, send+, receiv+, gnb, UE, update, handover, indicat+, management, performance, quality

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 116567658 A (BEIJING SAMSUNG TELECOM R&D CENTER et al.) 08 August 2023 (2023-08-08)<br>description, paragraphs [0162]-[0526], and figures 5-8 | 1-108 |
| X | CN 115398820 A (QUALCOMM INC.) 25 November 2022 (2022-11-25)<br>description, paragraphs [0055]-[0243] | 1-108 |
| A | CN 115988560 A (NANJING SHANGTIE ELECTRONIC ENGINEERING CO., LTD.) 18 April 2023 (2023-04-18)<br>entire document | 1-108 |
| A | CN 114765771 A (SPREADTRUM COMMUNICATIONS (SHANGHAI) CO., LTD.) 19 July 2022 (2022-07-19)<br>entire document | 1-108 |
| A | CN 115827337 A (HUAWEI TECHNOLOGIES CO., LTD.) 21 March 2023 (2023-03-21)<br>entire document | 1-108 |
| A | WO 2022034259 A1 (NOKIA TECHNOLOGIES OY) 17 February 2022 (2022-02-17)<br>entire document | 1-108 |

[✓] Further documents are listed in the continuation of Box C.    [✓] See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **18 April 2024** | **03 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 765 744 A1**

**INTERNATIONAL SEARCH REPORT**

International application No.

**PCT/CN2023/113640**

**C.     DOCUMENTS CONSIDERED TO BE RELEVANT**

| Category* | Citation of document, with indication, where appropriate, of the relevant passages | Relevant to claim No. |
|---|---|---|
| A | WO 2022222089 A1 (QUALCOMM INC. et al.) 27 October 2022 (2022-10-27) entire document | 1-108 |

Form PCT/ISA/210 (second sheet) (July 2022)

42

**INTERNATIONAL SEARCH REPORT**
Information on patent family members

International application No.

**PCT/CN2023/113640**

| Patent document cited in search report | | | Publication date (day/month/year) | Patent family member(s) | | | Publication date (day/month/year) |
|---|---|---|---|---|---|---|---|
| CN | 116567658 | A | 08 August 2023 | None | | | |
| CN | 115398820 | A | 25 November 2022 | EP | 4136591 | A1 | 22 February 2023 |
| | | | | US | 2021328630 | A1 | 21 October 2021 |
| | | | | US | 11424791 | B2 | 23 August 2022 |
| | | | | WO | 2021211703 | A1 | 21 October 2021 |
| CN | 115988560 | A | 18 April 2023 | None | | | |
| CN | 114765771 | A | 19 July 2022 | None | | | |
| CN | 115827337 | A | 21 March 2023 | None | | | |
| WO | 2022034259 | A1 | 17 February 2022 | None | | | |
| WO | 2022222089 | A1 | 27 October 2022 | EP | 4327485 | A1 | 28 February 2024 |

Form PCT/ISA/210 (patent family annex) (July 2022)